# EUROPEAN PATENT SPECIFICATION

(11) **EP 4 503 579 B1**
(45) Date of publication and mention of the grant of the patent: **28.01.2026**
(21) Application number: 23189190.4
(22) Date of filing: 02.08.2023
(51) Int. Cl.: H04L 67/1001

(54) **ESTABLISHING A SERVER CONNECTION**
AUFBAU EINER SERVERVERBINDUNG
ÉTABLISSEMENT D'UNE CONNEXION DE SERVEUR

(43) Date of publication of application: 05.02.2025
(73) Proprietor: Outfit7 Limited, London EC3M 6BN (GB)
(72) Inventor: Urbanek, Michal, 18-400 Lomza (PL); Sever, Nejc, 1000 Ljubljana (SI); Bezensek, Mitja, 1000 Ljubljana (SI); Kravos, Mitja, 1260 Ljubljana - Polje (SI)
(74) Representative: Hoffmann Eitle

(56) References cited:
- US-A1- 2008 159 232
- US-B2- 10 432 708
- US-B2- 10 728 206

## Description

### Technical Field

Example aspects herein relate to establishing a connection between an application running on a mobile terminal device in a wireless network and a distributed server arrangement comprising a plurality of servers each deployed in a different geographical location.

### Background

US 10,728,206 B2 discloses systems and method for reordering the IP addresses within a DNS response. The servers associated with a domain can often be located across multiple locations. The paths from a client to each of those different servers can have different link qualities. Additionally, the connection between the client and the domain can have different quality requirements. The systems and methods in US 10,728,206 B2 consider the link qualities and the connection quality requirements to reorder the IP addresses within a DNS response. By reordering the IP addresses, the system can control to which of the servers the client connects and can ensure that the connection is made over a path that can fulfill the connection's quality requirements.

Many software applications (apps) installed on a terminal device such as a smartphone, tablet computer, etc. need to frequently connect to a backend server. In this regard, by backend server is meant a server which provides a "backend" application that is designed to cooperate with the application installed on the terminal device (the "frontend" application). For example, the backend application may store user data associated with the frontend application, provide a configuration for the frontend application, perform analytics for the frontend application, coordinate between multiple instances of the frontend application on respective terminal devices, and/or provide a service which has processing requirements that exceed the capability of a terminal device. An application installed on a terminal device may, for example, connect to a backend server to pass user data to the backend server, to retrieve a new configuration from the backend server, to provide data for analytics performed by the backend server, to coordinate between multiple instances of the application on respective terminal devices, and/or to use a service which has processing requirements that exceed the capability of the terminal device.

To provide high availability, multiple servers are often provided in a distributed server arrangement, with respective servers in different geographical locations, each of which can act as the backend server. Such a distributed server arrangement can handle failover, increase capacity and reduce latency and increase reliability for a connection with a terminal device.

In a known technique for establishing a connection to a distributed server arrangement, an application on a terminal device connects initially to a fixed registry server in order to obtain an address of an optimal server in the distributed server arrangement for that terminal device to subsequently connect to. Low latency is usually achieved by the registry server instructing the application on the terminal device to connect to a server in the distributed server arrangement which is closest to the terminal device in geographical terms.

Software applications require a stable and reliable connection to a backend server, as a failed connection can result in data loss and application errors.

However, due to variations in the quality of device network hardware and service quality of various mobile carriers, software applications running on terminal devices which communicate with a backend server using wireless networks experience a lot of variation in network connection quality and stability.

The quality of a connection between a given mobile terminal device and a backend server in the form of a distributed server arrangement will also vary depending on which of the multiple servers of the distributed server arrangement is used for the connection, if a location of, or a connection route to, each of the multiple servers is different.

Additionally, when designing an international distributed server arrangement, it is necessary to provide technical solutions to potential problems arising from country specific security policies. For example, certain countries may block access to servers located in other countries or access to a cloud service provider. Such restricted access may not be permanent, and therefore a server may be accessible most of the time with intermittent unavailability or may become inaccessible only within a particular time frame.

Furthermore, in some software applications, the average session length (that is, the average length of time a user has the application open) is very short, meaning that it is crucial that the application exchanges information with the backend server as fast as possible because the connection between the application and the backend server may be dropped when a user closes the application.

Additionally, some calls **(i.e.** messages or requests) between an application in a terminal device and a backend server are not idempotent. In other words, multiple instances of a call can affect the information stored in the application or stored in the distributed server arrangement multiple times. Therefore, it is not possible to call multiple servers of a distributed server arrangement in parallel, because an unpredictable number of successful calls would produce an unpredictable result. Accordingly, in such a case, the application can only attempt to contact one server of the distributed server arrangement at a time.

Each connection attempt takes time and a user may close the application before a connection to the distributed server arrangement is established. As a result, a technique of attempting to contact servers in the order of a static server priority list of servers may not be fast enough, especially if changes in the network and/or changes in the location of the mobile terminal device have occurred since the static server priority list was created.

In view of the above problems, it is desirable to provide a method for establishing a connection between an application running on a mobile terminal device in a wireless network and a distributed server arrangement comprising a plurality of servers each deployed in a different geographical location, in which a server of the distributed server arrangement for establishing the connection is selected in a way which achieves at least one of reducing the time required to connect to the distributed server arrangement, reducing the time to transfer information, improving the quality of the connection, and improving the stability of the connection.

### Summary

There is provided a system as set out in claim 1.

There is also provided a method as set out in claim 7.

There is also provided a method as set out in claim 12.

There is also provided a computer program as set out in claim 18.

There is also provided a computer program as set out in claim 19.

### Brief Description of the Drawings

Example embodiments of the invention will now be described in detail, by way of example only, with reference to the accompanying drawings. Like reference numerals appearing in different ones of the figures can denote identical or functionally similar elements, unless otherwise indicated.
Figure 1 is a schematic diagram showing an example of a system in which various example embodiments of the invention may be practised.
Figure 2 schematically shows an example of a general kind of programmable processing apparatus that may be used to implement a mobile terminal device or a server in example embodiments of the invention.
Figure 3 provides a functional view illustrating the functionalities and storage of a mobile terminal device in an example embodiment.
Figure 4 provides a functional view illustrating the functional modules and storage of a server in an example embodiment.
Figure 5 shows processing operations in a probing process performed by an application on a mobile terminal device in an example embodiment, the operations being performed to obtain connection quality information for servers in a distributed server arrangement.
Figure 6 shows processing operations in a connecting process performed by an application on a mobile terminal device in an example embodiment, the operations being performed to establish a connection between the application and a server in a distributed server arrangement.
Figure 7 shows processing operations performed by a server in a distributed server arrangement in an example embodiment, the operations being performed to obtain connection quality information about servers of the distributed server arrangement.
Figures 8A and 8B show first and second examples of processing operations performed by a server in a distributed server arrangement in example embodiments, the operations being performed to provide a server priority list to an application on a mobile terminal device.
Figure 9 shows processing operations performed by a server in a distributed server arrangement in an example embodiment, the operations being performed to establish and use a connection between an application on a mobile terminal device and the server.
Figure 10 shows processing operations performed in a system of an example embodiment comprising a mobile terminal device and a distributed server arrangement.
Figure 11 shows processing operations of a method performed in an example embodiment for establishing a connection between an application running on a mobile terminal device in a wireless network and a distributed server arrangement comprising a plurality of servers each deployed in a different geographical location.
Figure 12 shows processing operations of a method performed in an example embodiment by an application running on a mobile terminal device in a wireless network for establishing a connection between the application and a distributed server arrangement comprising a plurality of servers each deployed in a different geographical location.
Figure 13 shows processing operations of a method performed in an example embodiment by a distributed server arrangement comprising a plurality of servers each deployed in a different geographical location, for establishing a connection between an application running on a mobile terminal device in a wireless network and the distributed server arrangement.

### Detailed Description

One aspect herein provides a method for establishing a connection between an application running on a mobile terminal device in a wireless network and a distributed server arrangement comprising a plurality of servers each deployed in a different geographical location. In the method, an application on each of a plurality of mobile terminal devices performs a probing process. The probing process comprises receiving a probing list from the distributed server arrangement, the probing list identifying one or more servers of the distributed server arrangement; for each server in the probing list, attempting to connect to the server and obtaining connection quality information for the server; and reporting the obtained connection quality information to the distributed server arrangement. The distributed server arrangement generates at least one server priority list based on the connection quality information reported from the plurality of mobile terminal devices, each server priority list identifying one or more servers of the distributed server arrangement and a connection order thereto. An application on a mobile terminal device performs a connecting process to establish a connection between the application and a server of the distributed server arrangement. The connecting process comprises receiving aserver priority list from the distributed server arrangement; and attempting to connect to servers in the server priority list in the connection order until either a connection is established or there are no further servers in the server priority list.

By probing different servers with different mobile terminal devices to obtain connection quality information for each connection and using the connection quality information to generate the at least one server priority list, the expected time to establish a connection can be reduced, and the expected quality and stability of the established connection can be improved.

The connection quality information for each server may comprise at least one of a connection establishment status indicating whether a connection to the server was established, and a connection establishment time indicating a time between attempting to connect to the server and establishing a connection to the server.

The inventors have found that connection establishment status and connection establishment time are particularly relevant parameters for selecting servers of the distributed server arrangement to be included in a server priority list in order to reduce the expected time to establish the connection, and/or improve the expected quality and/or improve the stability of the established connection.

The distributed server arrangement may generate a plurality of server priority lists, the application on the mobile terminal device that performs the connecting process may provide information about a language setting of the mobile terminal device to the distributed server arrangement, and the distributed server arrangement may determine which of the plurality of server priority lists to provide to the mobile terminal device based upon the language setting of the mobile terminal device.

By taking into account the language setting of the mobile terminal device, the distributed server arrangement can provide a server priority list which is more likely to correspond to the geographical location of the mobile terminal device, without needing to track the location of the mobile terminal device. This in turn can improve one or more of the expected characteristics (time to establish a connection and/or quality and/or stability) of a connection established using the server priority list. Furthermore, by pre-generating a plurality of server priority lists, and selecting one of the plurality of server priority lists based upon the language setting of the mobile terminal device, the time to provide the mobile terminal device with a server priority list can be reduced.

The application on the mobile terminal device that performs the connecting process may provide information about a language setting of the mobile terminal device; and the distributed server arrangement may generate a server priority list for the mobile terminal device based upon the language setting of the mobile terminal device.

By generating a server priority list based upon a language setting of the mobile terminal device which is going to use the server priority list, the distributed server arrangement can provide a server priority list which is more likely to correspond to the geographical location of the mobile terminal device, without needing to track the location of the mobile terminal device. This in turn can improve one or more of the expected characteristics (time to establish a connection and/or quality and/or stability) of a connection established using the server priority list. At the same time, the number of server priority lists which need to be generated and stored on the distributed server arrangement can be reduced and the ability of the distributed server arrangement to adapt to new locations of mobile terminal devices and servers can be improved.

When a connection to a server in the server priority test is established in the connecting process, the application may send application data to the server and receive a new server priority list from the server. Optionally, the application may receive application data from the server. Optionally, the application may further receive a new probing list from the server.

By using a single established connection for multiple purposes, the chance of completing all necessary communication between the mobile terminal device and the distributed server arrangement within an application session can be improved.

The application may send an HTTP POST request to connect to a server in the server priority list, the HTTP POST request including application data from the application. In response to a successful connection with the HTTP POST request, the application receives from the server an HTTP success status code with a new server priority list, optionally application data from the server and optionally a new probing list.

By sending an HTTP POST request including application data from the application and by receiving an HTTP success status code with a new server priority list, information is transferred between the application and the server in a reduced number of exchanges, thereby reducing the time to transfer the information.

Another example aspect herein provides a method performed by an application running on a mobile terminal device in a wireless network for establishing a connection between the application and a distributed server arrangement comprising a plurality of servers each deployed in a different geographical location. The application performs a probing process. The probing process comprises receiving a probing list from the distributed server arrangement, the probing list identifying one or more servers of the distributed server arrangement; for each server in the probing list, attempting to connect to the server and obtaining connection quality information for the server; and reporting the obtained connection quality information to a server in the distributed server arrangement. The application also performs a connecting process to establish a connection between the application and a server of the distributed server arrangement. The connecting process comprises receiving a server priority list from the distributed server arrangement, the server priority list identifying one or more servers of the distributed server arrangement and a connection order thereto based upon the connection quality information from the application and a plurality of applications on different mobile terminal devices in the wireless network; and attempting to connect to servers in the server priority list in the connection order until either a connection is established or there are no further servers in the server priority list.

Another example aspect herein provides a method performed by a distributed server arrangement comprising a plurality of servers each deployed in a different geographical location, for establishing a connection between an application running on a mobile terminal device in a wireless network and the distributed server arrangement. For each of a plurality of mobile terminal devices, the distributed server arrangement provides a probing list to an application running on the mobile terminal device, the probing list identifying one or more servers of the distributed server arrangement, and the distributed server arrangement receives connection quality information reported from the application running on the mobile terminal device for each server in the probing list. The distributed server arrangement also generates at least one server priority list based on the connection quality information reported from the plurality of mobile terminal devices, each server priority list identifying one or more servers of the distributed server arrangement and a connection order thereto. The distributed server arrangement also provides a server priority list to an application on a mobile terminal device and, in response to an attempt to connect to a server in the server priority list from the application on the mobile terminal device, establishes a connection between the server in the server priority list and the application on the mobile terminal device.

Another example aspect herein provides a computer program defining an application to be run on a mobile terminal device in a wireless network, the computer program comprising instructions which, when executed by the mobile terminal device, cause the mobile terminal device to run an application, wherein the application performs a method for establishing a connection between the application and a distributed server arrangement comprising a plurality of servers each deployed in a different geographical location. The application performs a probing process. The probing process comprises receiving a probing list from the distributed server arrangement, the probing list identifying one or more servers of the distributed server arrangement; for each server in the probing list, attempting to connect to the server and obtaining connection quality information for the server; and reporting the obtained connection quality information to a server in the distributed server arrangement. The application also performs a connecting process to establish a connection between the application and a server of the distributed server arrangement. The connecting process comprises receiving a server priority list from the distributed server arrangement, the server priority list identifying one or more servers of the distributed server arrangement and a connection order thereto based upon the connection quality information from the application and a plurality of applications on different mobile terminal devices in the wireless network; and attempting to connect to servers in the server priority list in the connection order until either a connection is established or there are no further servers in the server priority list.

Another example aspect herein provides a computer program for a distributed server arrangement comprising a plurality of servers each deployed in a different geographical location, the computer program comprising instructions which, when executed by the distributed server arrangement, cause the distributed server arrangement to perform a method for establishing a connection between an application running on a mobile terminal device in a wireless network and the distributed server arrangement. For each of a plurality of mobile terminal devices, the distributed server arrangement provides a probing list to an application running on the mobile terminal device, the probing list identifying one or more servers of the distributed server arrangement, and the distributed server arrangement receives connection quality information reported from the application running on the mobile terminal device for each server in the probing list. The distributed server arrangement also generates at least one server priority list based on the connection quality information reported from the plurality of mobile terminal devices, each server priority list identifying one or more servers of the distributed server arrangement and a connection order thereto. The distributed server arrangement also provides a server priority list to an application on a mobile terminal device and, in response to an attempt to connect to a server in the server priority list from the application on the mobile terminal device, establishes a connection between the server in the server priority list and the application on the mobile terminal device.

Another example aspect herein provides a system. The system comprises a plurality of mobile terminal devices in one or more wireless networks, each mobile terminal device having an application thereon. The system also comprises a distributed server arrangement comprising a plurality of servers each deployed in a different geographical location. The application on each of the plurality of mobile terminal devices is configured to: receive a probing list from the distributed server arrangement, the server probing list identifying one or more servers of the distributed server arrangement; for each server in the server probing list, attempt to connect to the server and obtain connection quality information for the server; and report the obtained connection quality information to the distributed server arrangement. The distributed server is configured to generate at least one server priority list based on the connection quality information reported from mobile terminal devices in the one or more wireless networks, each server priority list identifying one or more servers of the distributed server arrangement and a connection order thereto. The application on each of the plurality of mobile terminal devices is configured to receive a server priority list from the distributed server arrangement; and attempt to connect to servers in the server priority list in the connection order until either a connection between the application and a server of the distributed server arrangement is established or there are no further servers in the server priority list.

Another example aspect herein provides a mobile terminal device configured to communicate in a wireless network. The mobile terminal device has an application configured to receive a probing list from a distributed server arrangement comprising a plurality of servers each deployed in a different geographical location, the probing list identifying one or more servers of the distributed server arrangement; for each server in the probing list, attempt to connect to the server and obtain connection quality information for the server; report the obtained connection quality information to a server in the distributed server arrangement; and receive a server priority list from the distributed server arrangement, the server priority list identifying one or more servers of the distributed server arrangement and a connection order thereto based upon the connection quality information from the applications on mobile terminal devices in the wireless network; and attempt to connect to servers in the server priority list in the connection order until either a connection between the application and a server of the distributed server arrangement is established or there are no further servers in the server priority list.

Another example aspect herein provides a distributed server arrangement comprising a plurality of servers each deployed in a different geographical location. The distributed server arrangement is configured to, for each of a plurality of mobile terminal devices in one or more wireless networks, provide a probing list to an application running on the mobile terminal device, the probing list identifying one or more servers of the distributed server arrangement; for each of the plurality of mobile terminal devices, receive connection quality information reported from the application running on the mobile terminal device for each server in the probing list; generate at least one server priority list based on the connection quality information reported from the plurality of mobile terminal devices, each server priority list identifying one or more servers of the distributed server arrangement and a connection order thereto; provide a server priority list to an application on a mobile terminal device; and in response to an attempt to connect to a server in the server priority list from the application on the mobile terminal device, establish a connection between the server in the server priority list and the application on the mobile terminal device.

Although example embodiments of the invention will be described below, it will be evident that various modifications may be made to these example embodiments without departing from the scope of the invention as defined by the appended claims. Accordingly, the following description and the accompanying drawings are to be regarded as illustrative rather than restrictive.

In the following description and in the accompanying drawings, numerous details are set forth in order to provide an understanding of various example embodiments of the invention. However, it will be evident to those skilled in the art that example embodiments may be practiced without these details.

Reference is made in the following to software applications or "apps". These applications may take many forms and may have many different purposes. By way of example, an application may be an electronic game, but this is merely one example and should not be regarded as restrictive.

Reference is made in the following to mobile terminal devices. The term "mobile terminal device" should be construed to mean a portable computing device on which a software application can be run and that can connect wirelessly to a wireless network such as a mobile telephone network or a Wi-Fi network. A "mobile terminal device" may be, for example, a smartphone, a tablet computer, or a laptop.

Reference is made in the following to a "user". As used herein the term "user" should be interpreted to be an enduser who uses an application on a mobile terminal device. The user may, for example, be an individual registered as using the application.

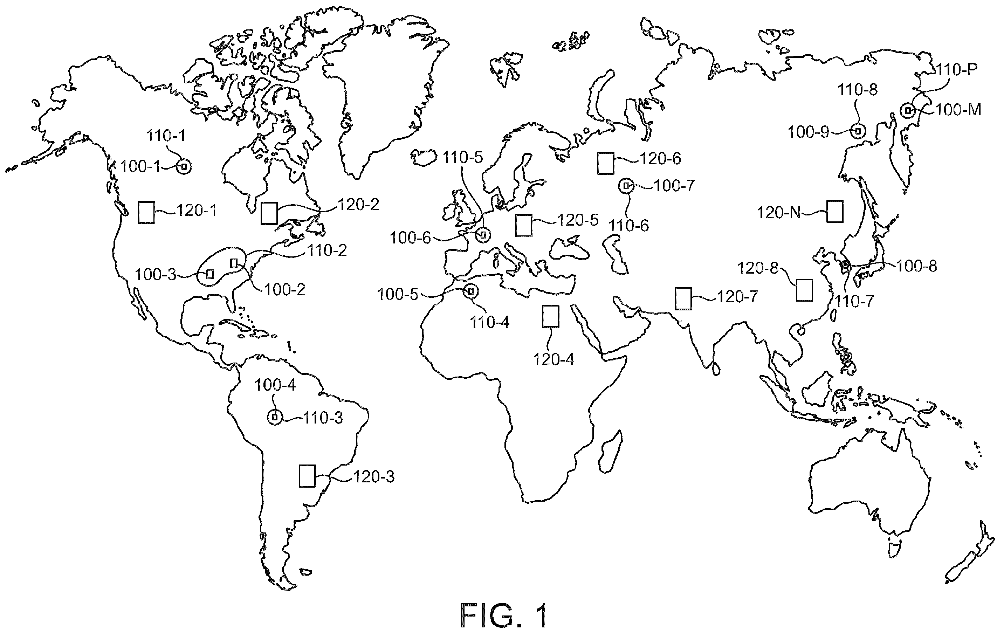

Figure 1 is a schematic diagram showing an example of a system in which various example embodiments of the invention may be practised. In the example, a plurality of mobile terminal devices 100-1, 100-2, ..., 100-M (hereinafter mobile terminal devices 100) are located at various geographical locations. Each mobile terminal device 100 is in a wireless network 110-1, 110-2, ..., 110-P (hereinafter wireless networks 110), which may comprise a Wi-Fi network, 3G network, 4G network, 5G network or any other wireless network. More than one mobile terminal device may be in a particular wireless network (as illustrated for example with mobile terminal devices 100-2 and 100-3 being within wireless network 110-2). However, for simplicity, most wireless networks 110 in Fig. 1 are illustrated as containing one mobile terminal device.

Additionally, in the example, a distributed server arrangement comprises a plurality of servers 120-1, 120-2, ..., 120-N (hereinafter servers 120) located at different geographical locations.

The servers 120 may be connected to allow communication therebetween so that the plurality of servers can act together as a backend server. The connections between the servers 120 may be temporary, permanent or a combination thereof. The connections may include a wireless communication path and may include a wired communication path, and more generally may be any communication path along which electromagnetic signals can be transmitted. Furthermore, each wireless network 110 can communicate with at least one server 120. For example, each wireless network 110 and each of the servers 120 may be configured to connect to the same communication path, such as the Internet.

Each mobile terminal device 100 is configured to communicate with the distributed server arrangement by performing wireless communication in the wireless network 110 in which the mobile terminal device 100 is located and by using a communication path between the wireless network 110 and a server 120 of the distributed server arrangement.

One or more servers 120 may be added to or removed from the distributed server arrangement over time. For example, a server may be temporarily removed for maintenance, or due to a technical problem or administrative problem with using the server in the distributed server arrangement. In another example, one or more servers 120 may be added to the distributed server arrangement to increase the number of servers 120 with which a mobile terminal device 100 may communicate.

Each of the plurality of mobile terminal devices 100 is capable of running a software application, sometimes referred to hereinafter as an application, which is installed thereon. The application has application functionality for providing a user functionality to a user of the mobile terminal device 100. That is, the application provides some functionality which is useful to the user. This may be a game, a social media interface, a utility such as a calendar, etc., and the specific nature of the application functionality is not relevant to the invention. The application functionality also has a function configured to exchange application data with one or more servers 120 of the distributed server arrangement. For example, the application may act as a thin client providing an interface between the user of the mobile terminal device 100 and user functionality that is provided by the distributed server arrangement. In another example, the application may provide user functionality without requiring a connection to the distributed server arrangement, and the application may establish a connection to the server to provide data for any one or more of a number of different processes performed by the distributed server arrangement, such as synchronizing application data between multiple devices that have the application installed, providing new configuration data to the application, performing application analytics, storing user data, etc. More generally, the user functionality may be a combination of first partial functionality provided by the application on the mobile terminal device 100 and second partial functionality provided by the distributed server arrangement.

The distributed server arrangement is configured to provide a server function for a mobile terminal device 100 which connects to the distributed server arrangement. For example, if the application on the mobile terminal device acts as a thin client, then the server function may provide the user functionality of the application. In another example, if the application provides certain user functionality without requiring a connection to the distributed server arrangement, then the server function may perform a number of different processes, such as synchronizing application data between multiple devices that have the application installed, providing new configuration data to the application, performing application analytics, storing user data, etc. In a non-limiting example embodiment, the server function is the same regardless of which of the plurality of servers 120 within the distributed server arrangement the mobile terminal device 100 connects to, although in other example embodiments, this need not be the case.

As will be described in more detail below, the distributed server arrangement and the application in each mobile terminal device 100 are configured to control to which server 120 of the distributed server arrangement each mobile terminal device 100 connects.

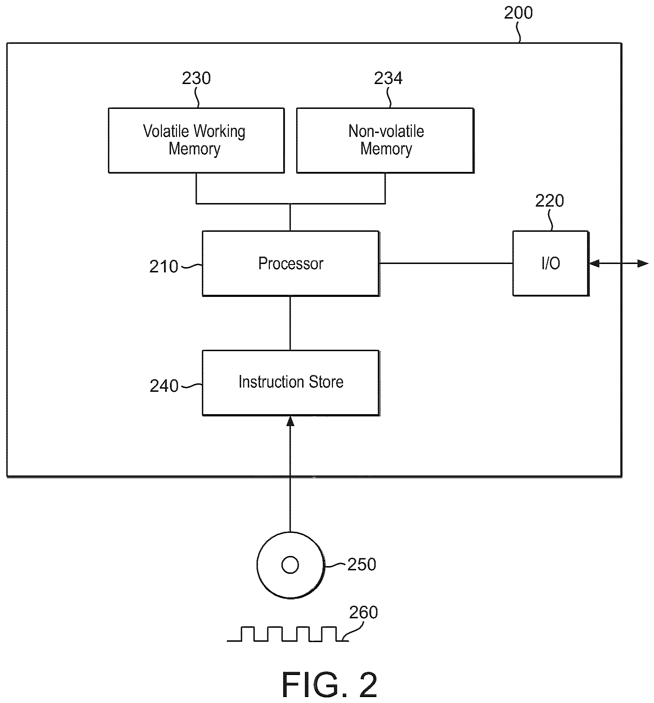

Referring now to Figure 2, an example of a general kind of programmable processing apparatus 200 that may be used to implement a mobile terminal device 100 or a server 120 in example embodiments is shown.

The programmable processing apparatus 200 comprises one or more processors 210, one or more input/output communication modules 220, one or more volatile working memories 230, one or more non-volatile memories 234 and one or more instruction stores 240 storing computer-readable instructions which can be executed by a processor 210 to effect the functional processing modules and to perform the processing operations as described hereinafter.

At least one input/output communication module 220 comprises apparatus for communicating with a network which may comprise one or more networks, such as the Internet, a telephone network, a cellular data network, a Wi-Fi network, a virtual private network (VPN), a local area network (LAN), a wide area network (WAN), or any other form of network. For a mobile terminal device 100, at least one input/output communication module 220 comprises apparatus for communicating with an input device such as a keyboard or game controller, and an output device such as a display screen, projector, etc.

An instruction store 240 is a non-transitory storage medium, which may comprise a non-volatile memory, for example in the form of a read-only-memory (ROM), a magnetic computer storage device (for example a hard disk) or an optical disk, which is pre-loaded with the computer-readable instructions. The instruction store 240 may additionally comprise a firmware memory, which may, for example, be used to store an operating system. Additionally or alternatively, an instruction store 240 may comprise writeable memory, such as random access memory (RAM) and the computer-readable instructions can be input thereto from a computer program product, such as a non-transitory computer-readable storage medium 250 (for example an optical disk such as a CD-ROM, DVD-ROM, etc.) or a computer-readable signal 260 carrying the computer-readable instructions.

The one or more volatile working memories 230 and one or more non-volatile memories 234 are used to implement the functional "storage" features described below. The instruction store 240 is used to store instructions defining the "functionality" features of an application described below, which are executed by the one or more processors 210. The functional "module" features of a server 120 described below may be implemented using software instructions stored in the instruction store 240, firmware instructions stored in the instruction store 240 or stored on a dedicated memory such as a flash memory, hardcoded instructions and/or a combination of instruction types, the instructions being executed by one or more general purpose processors, one or more dedicated processors such as Application-Specific Integrated Chips (ASICs), and/or using a combination of general purpose processors and dedicated processors.

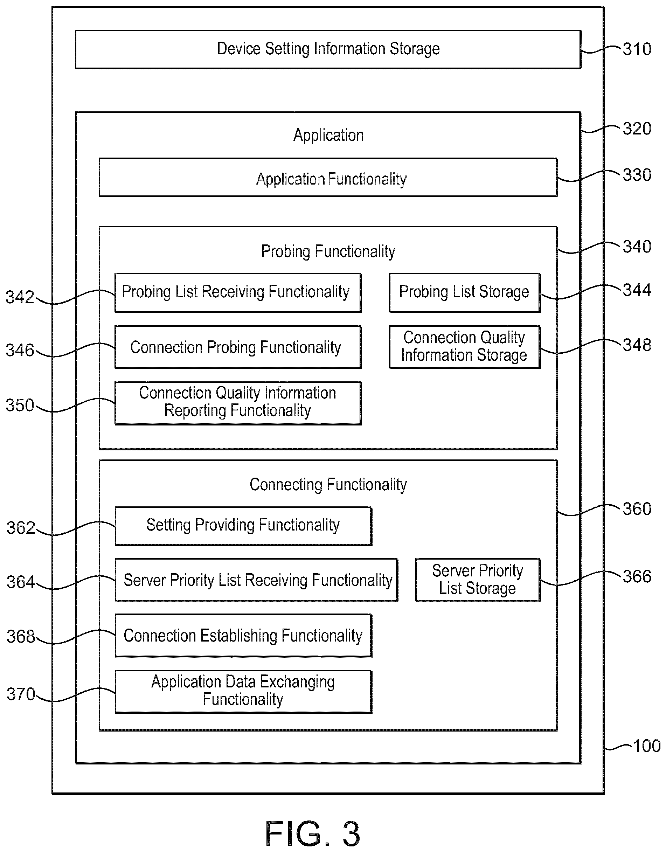

Figure 3 illustrates the functionalities and storage of a mobile terminal device 100 (which represents any mobile terminal device 100 shown in Figure 1).

For simplicity, functionalities and storage of the mobile terminal device that are conventional and/or unrelated to the operation of the present example embodiment are not illustrated in Figure 3. For example, functionality to display a keyboard for user input, display output images and texts and connect to a network, etc. are not illustrated in Figure 3 as they are conventional and well-understood by the skilled person.

Referring to Figure 3, the mobile terminal device stores device setting information in a device setting information storage 310 and stores instructions defining an application 320.

Device setting information is information about settings which apply to the device and/or to a user of the device, but which are not settings specific to the application. In the example, the device setting information stored in the device setting information storage 310 includes information identifying an operating system platform of the mobile terminal device 100, a language setting, a country code, and a type of the wireless network 110 in which the mobile terminal device 100 is located, e.g. a Wi-Fi, 3G, 4G or 5G network, etc. However, these are merely examples of device setting information that may be stored, and the device setting information storage 310 may store other device setting information in addition to, or instead of, these examples. Any device setting information which can be used by the distributed server arrangement for determining a server priority list may be stored in the device setting information storage 310. In a non-limiting example, the device setting information may correspond to a device locale made available to the application 320 by the operating system platform of the mobile terminal device 100.

The instructions defining the application 320 comprise instructions defining application functionality 330, probing functionality 340 and connecting functionality 360.

The application functionality 330 depends upon the nature of the application 320. For example, if the application 320 is an electronic game, then the application functionality 330 implements game rules defining, inter alia, the structural setup of the game that allows user choice-making to occur and determines how the game play evolves from the beginning to the end in response to play actions and decisions.

The probing functionality 340 defines one or more processes for obtaining information about one or more connections between the application on the mobile terminal device 100 and the distributed server arrangement. The probing functionality 340 includes probing list receiving functionality 342, probing list storage 344, connection probing functionality 346, connection quality information storage 348 and connection quality information reporting functionality 350.

The probing list receiving functionality 342 defines one or more processes for receiving a probing list from the distributed server arrangement and storing the probing list in the probing list storage 344. The probing list comprises a list of servers 120 of the distributed server arrangement, for which information about their connection with the mobile terminal device 100 is to be obtained in a probing process. The probing list may also include configuration information indicating a probing interval (labelled "probingIntervalMinutes" in a non-limiting example below) of time that the connection probing functionality 346 is to leave between each performance of the probing process and a counter (labelled "probingCounter" in a non-limiting example below) indicating a number of times that the connection probing functionality 346 is to perform the probing process for each server 120 in the probing list. The probing process may be performed by the connection probing functionality 346 when the application is running and no connection to the distributed server arrangement is currently required, or when a connection to the distributed server arrangement is already established. In a non-limiting example, the probing list may be provided in a JSON format as shown in the following, although other formats are possible:

```
 {
    "probingIntervalMinutes": 15,
    "probingCounter": 10,
    "urls": [
         "http://api.example.com/rest/v1/ping",
         "http://api2.example.com/rest/v1/ping",
         "http://api.domain.com/rest/v1/ping",
         "http://api2.domain.com/rest/v1/ping"
     ]
 }
```

In the above probing list example, the servers 120 for which the probing process is to be performed are identified using URLs including domain names. Each URL is allocated by the respective server for responding to probing attempts. In other examples, the servers 120 could be identified by other known techniques such as IP addresses. Additionally, the configuration information of the probing list is optional, and the probing process may instead be performed only once or may be performed a predetermined number of times with a predetermined probing interval. Furthermore, the JSON format is merely an example, and any format suitable for describing the probing list could be used to implement example embodiments of the invention.

The connection probing functionality 346 defines one or more processes for attempting to connect to each server 120 in the probing list stored in the probing list storage 344, and, for each connection, obtaining connection quality information and storing the connection quality information in the connection quality information storage 348. In a non-limiting example, the connection probing functionality 346 is configured to attempt to connect to each server by sending an HTTP GET request for the corresponding URL in the probing list, although different connection processes can be used instead. Connection quality information is information about the connection between the mobile terminal device 100 on which the application 320 is running and the server 120 with which the application attempts to connect. For example, if the application attempts to connect to a server using an HTTP GET request, the connection quality information for each server may comprise an HTTP status provided in the response to the GET request, which serves as a connection establishment status indicating whether a connection to the server 120 was successfully established or whether an error occurred such as not receiving a response from the server. The connection quality information may also comprise a response time (latency) measured by the connection probing functionality 346, which serves as a connection establishment time indicating a time between attempting to connect to the server 120 and establishing a connection to the server 120. The response time may be measured by the connection probing functionality 346 using a response timer. In other examples, the HTTP status may be omitted from the connection quality information or implicitly indicated using the response time. In yet further examples, where the response time is less important than determining whether or not a server is available for connection, the HTTP status may be included in the connection quality information and the response time may be omitted.

The connection quality information reporting functionality 350 defines one or more processes for reporting the connection quality information stored in the connection quality information storage 348 to the distributed server arrangement. In a non-limiting example, the application 320 establishes a connection to a server 120 of the distributed server arrangement which is selected using the connecting functionality 360, in order to report the connection quality information. However, in other examples, the connection quality information may be reported to a fixed predetermined server 120 or a server selected in another way (for example by notification from the distributed server arrangement). In a non-limiting example, the connection quality information is reported to the distributed server arrangement using a JSON format as shown in the following example, although the connection quality information may be reported in other formats:

```
 [{
    "u": "http://api.example.com/rest/v1/ping",
    "r": "OK",
    "rT": 10000
 }, {
    "u": "http://api2.example.com/rest/v1/ping",
    "r": "Could not resolve host name",
    "rT": 10000
 }, {
    "u": "http://api.domain.com/rest/v1/ping",
    "r": "OK",
    "rT": 1000
 }, {
    "u": "http://api2.domain.com/rest/v1/ping",
    "r": "Error reaching host",
    "rT": 10300
 }]
 
```

In this format, a plurality of JSON objects (denoted by curly braces {}) each include an indication of a server (element "u" which includes the URL used for probing the server), a connection establishment status (element "r" which includes a text representation of an HTTP status), and a connection establishment time (element "rT").

In a non-limiting example, connection quality information is reported by the connection quality information reporting functionality 350 when connections to all servers in the probing list have been attempted according to the probing interval and counter configured by the probing list. However, in other examples, connection quality information may be reported continuously as it is obtained, or may be reported according to a reporting schedule.

The connecting functionality 360 defines one or more processes for establishing a connection between the application 320 and a server 120 of the distributed server arrangement in order to pass data to the distributed server arrangement and/or receive data from the distributed server arrangement. As explained previously, the nature of this data will be dependent upon the type of the application 320, but this data may include, by way of example, user data, data of a new configuration of the application 320, data for analytics, data for coordinating between multiple instances of the application 320 on respective terminal devices 100, and/or data of a service provided by the distributed server arrangement which has processing requirements that exceed the capability of a terminal device.

The connecting functionality 360 includes setting providing functionality 362, server priority list receiving functionality 364, server priority list storage 366, connection establishing functionality 368 and application data exchanging functionality 370.

The setting providing functionality 362 defines one or more processes for providing setting information to the distributed server arrangement. In a non-limiting example, the setting information that is provided comprises some or all of the device setting information from the device setting information storage 310. By way of example, the setting information may include one or more of information identifying an operating system platform of the mobile terminal device 100, a language setting, a country code, and a type of the wireless network 110. In a non-limiting example, the setting providing functionality 362 provides only setting information which does not require additional approval from a user of the mobile terminal device, thereby avoiding privacy issues arising from use of personal information such as GPS location data. It should be noted that, in other examples, the setting providing functionality 362 may additionally or alternatively provide any other device setting information stored in the device setting information storage 310 and/or application setting information of the application 320 as the setting information.

As described below, the setting information may be used by the server 120 to select or generate a server priority list for the application 320.

The server priority list receiving functionality 364 defines one or more processes for receiving a server priority list from the distributed server arrangement and storing the server priority list in the server priority list storage 366. The server priority list includes a list of servers 120 of the distributed server arrangement and a connection order, indicating that, in a connecting process, the application 320 should attempt to connect to servers in the server priority list, in the order of the connection order, until a connection is established with the distributed server arrangement.

The connection establishing functionality 368 defines one or more processes for attempting to connect to the servers 120 of the server priority list in the connection order. In a non-limiting example, an IP protocol is used, and the connection establishing functionality 368 determines whether a connection attempt is successful based on whether an HTTP status response is received before expiry of a timeout timer, with the attempt being determined to be a failure if the timeout timer expires without such a response.

The application data exchanging functionality 370 defines one or more processes for passing information from the application functionality 330 to the distributed server arrangement and/or receiving information from the distributed server arrangement, when a connection has been established using the connection establishing functionality 368. The exchanged information depends on the nature of the application 320 and the extent to which the application functionality 330 relies on functions provided by the distributed server arrangement. For example, as described above, the application 320 may act as a thin client that is highly reliant on functions provided by the distributed server arrangement, in which case the exchanged information may include low level information such as touch interactions or keystrokes received from a user at an interface of the application, transmitted from the application 320 to the distributed server arrangement, and low-level information defining how the interface of the application should respond to the touch interactions or keystrokes, transmitted from the distributed server arrangement to the application 320. Alternatively, if the application has low reliance on functions performed by the distributed server arrangement, the exchanged information may include high level information transmitted from the application 320 to the distributed server arrangement, such as information about user engagement with the application (e.g. time spent engaging, game levels completed etc.), and high-level information transmitted from the distributed server arrangement to the application 320, such as engagement rewards earned by a user in return for user engagement.

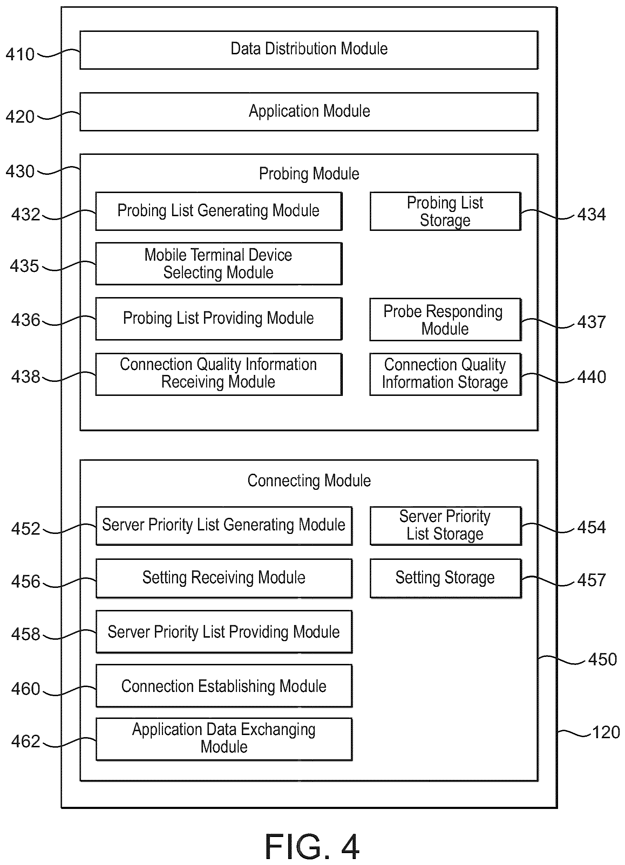

Figure 4 illustrates the functional modules and storage of a server 120 (which represents any server 120 of the distributed server arrangement).

Referring to Figure 4, the server 120 may have a data distribution module 410, an application module 420, a probing module 430 and a connecting module 450.

Each module may be implemented in any number of different ways, for example using software instructions stored in the instruction store 240, firmware instructions stored in the instruction store 240 or stored on a dedicated memory such as a flash memory, hardcoded instructions and/or a combination of instruction types, the instructions being executed by one or more general purpose processors, one or more dedicated processors such as Application-Specific Integrated Chips (ASICs), and/or using a combination of general purpose processors and dedicated processors.

The data distribution module 410 is configured to perform one or more processes for distributing data among the servers 120 of the distributed server arrangement. The data distribution module 410 may be configured, for example, to share connection quality information reported to different servers 120 by different mobile terminal devices 100, to share status information to identify which servers 120 are currently available in the distributed server arrangement, to share current server load information about each of the servers 120, to share one or more server priority lists, and/or to share application data associated with a user of the application 320.

The application module 420 is configured to provide one or more server functions associated with the application 320. As explained above, the nature of the one or more server functions will depend on the nature of the application 320. For example, the application module 420 may store user data associated with the application 320, provide a configuration for the application 320, perform analytics for the application 320, coordinate between multiple instances of the application 320 on respective mobile terminal devices 100, and/provide a service which has processing requirements that exceed the capability of a mobile terminal device 100. For example, in the case where the application 320 acts as a thin client, the application module 420 defines the user functionality which is provided to a user of the mobile terminal device 100 using the interface of the application 320. For example, the application module 420 may define game rules for processing touch interactions and keystrokes and a process for generating a screen to be displayed by the application 320 on the mobile terminal device 100. On the other hand, in a case where the application 320 provides the user functionality without requiring a connection to the distributed server arrangement, the application module 420 may define one or more processes for management of user information such as synchronization of application data between instances of the application 320 on multiple mobile terminal devices 100 used by the user.

The probing module 430 is configured to perform one or more processes for cooperating with the probing functionality 340 of the application 320 in each of a plurality of mobile terminal devices 100, in order to obtain connection quality information from each of the mobile terminal devices. The probing module 430 may have a probing list generating module 432, probing list storage 434, a mobile terminal device selecting module 435, a probing list providing module 436, a probe responding module 437, a connection quality information receiving module 438 and connection quality information storage 440.

The probing list generating module 432 is configured to perform one or more processes to generate at least one probing list and store the at least one probing list in probing list storage 434. The process(es) used to generate the one or more probing lists by the probing list generating module 432 is not limited. In a non-limiting example, probing lists are generated for particular geographical areas where a recent change in network quality, reliability or topology has been caused or detected by the distributed server arrangement. However, in other examples, the one or more probing lists may be generated in different ways, and may be predetermined lists, and/or randomly generated lists.

The probing list generating module 432 need not be present in all servers 120. Instead, only one server 120 (or a subset of the servers 120) need have the probing list generating module 432 and the generated server priority list(s) can be distributed to other servers 120 by the data distribution module 410.

The mobile terminal device selecting module 435 is configured to perform one or more processes to select one or more mobile terminal devices 100 to perform a probing process. The process(es) used to select the one or more mobile terminal devices is not limited. In a non-limiting example, the mobile terminal device(s) 100 to perform the probing process are selected based on respective locations of the mobile terminal devices 100. The location of a mobile terminal device can be estimated using the IP address from which the mobile terminal device 100 last communicated with the distributed server arrangement, or can be provided explicitly as geographical location information (such as a GPS position) or implicitly as a language setting by the setting providing functionality 362 of the application 320 on the mobile terminal device 100 (for example, if the language is set to Chinese, it can be determined (estimated) that the mobile terminal device is in China). Using the respective geographical locations of the mobile terminal devices enables the distributed server arrangement to associate connection quality information with geographical locations. Furthermore, using an IP address or language setting enables estimation of a location of the mobile terminal device without the privacy issues of handling explicit location information for users. However, the mobile terminal device(s) to perform probing may be selected in other ways. For example, the mobile terminal device(s) 100 to perform the probing process may be selected using a predetermined list, and/or selected randomly.

The mobile terminal device selecting module 435 need not be present in all servers 120. Instead, only one server 120 (or a subset of the servers 120) need have the mobile terminal device selecting module 435 and the selected mobile terminal device(s) may be notified to other servers 120 by the data distribution module 410.

The probing list providing module 436 is configured to perform one or more processes to provide at least one probing list stored in probing list storage 438 to the probing list receiving functionality 342 of the application 320 on each mobile terminal device 100 that was selected by mobile terminal device selecting module 435 and that connects to the distributed server arrangement.

In a non-limiting example, the probing list provided to each of the selected mobile terminal devices 100 is selected based on a degree of correspondence between the estimated location of the mobile terminal device and a particular geographical area for which the probing list was generated. However, the probing list may be selected in different ways. For example, a probing list may be selected randomly.

The probe responding module 437 is configured to receive requests from an application 320 to connect to the server 120 in a probing process performed by the application 320, and to respond to the connection request so that connection quality information can be obtained by the application 300. In a non-limiting example, if the application 320 in the mobile terminal device 300 performs a probing process using a URL corresponding to the server which has been provided in a probing list, the probe responding module 437 is configured to respond with an HTTP status of 204 NO CONTENT, confirming that the connection attempt was successful without transmitting any additional information. Alternatively, the probe responding module 437 could be configured to provide a response to the mobile terminal device in other ways, for example by providing a response that includes an HTTP success status and also includes other information which may be, for example, information about the uplink latency and/or information for verifying the connection attempt.

The connection quality information receiving module 438 is configured to perform one or more processes for receiving connection quality information from the connection quality information reporting functionality 350 of the application 320 of each of the selected mobile terminal devices 120, and to store the connection quality information in the connection quality information storage 440. The stored connection information is associated with information identifying the respective servers 120 for which the connection quality information was obtained. In a non-limiting example, the stored connection quality information for each server 120 is also associated with an identifier of the mobile terminal device 120 which reported the connection quality information. However, in other examples, the connection quality information may be stored in association with an identifier of the location of the mobile terminal device without identifying the mobile terminal device itself, or may be stored without association with a mobile terminal device or location.

The connecting module 450 is configured to perform one or more processes to, inter alia, provide an application 320 in a mobile terminal device 100 with a server priority list. The connecting module 450 may have a server priority list generating module 452, server priority list storage 454, a setting receiving module 456, setting storage 457, a server priority list providing module 458, a connection establishing module 460 and an application data exchanging module 462.

The server priority list generating module 452 is configured to perform one or more processes to generate at least one server priority list and store the at least one server priority list in server priority list storage 454. The one or more server priority lists are generated using the connection quality information stored in the connection quality information storage 440. The process used to generate the one or more server priority lists by the server priority list generating module 452 is otherwise not limited, and some non-limiting examples will now be described.

In an example, the one or more server priority lists are generated using connection quality information obtained by multiple different mobile terminal devices.

In an example, the server priority lists identify servers 120 of the distributed server arrangement which are located within respective geographical areas, wherein the servers 120 of each server priority list are ordered by increasing average latency in the connection quality information. More specifically, as described above, the connection quality information for a server 120 may include a response time (latency) indicating a time between the application 320 on a mobile terminal device 100 attempting to connect to the server 120 and a connection being established between the application 320 and the server 120. An average latency for each server 120 may be calculated based on one or more mobile terminal devices 100 reporting connection quality information multiple times for the server 120.

In an example, the one or more server priority lists is generated for a particular mobile terminal device 100. If the particular mobile terminal device 100 has previously reported connection quality information for a probing list of servers 120, the server priority list may be generated to include the same servers 120 as the probing list. The server priority list may be sorted according to response times indicated for the respective servers 120 in the connection quality information. If the particular mobile terminal device has reported connection quality information multiple times, the server priority list may be generated based on average response times indicated for the respective servers 120.

Average response times may be moving average response times, calculated for a predetermined number of times that the mobile terminal device has reported connection quality information.

In an example, the server priority list generating module 452 may generate server priority lists based on the connection quality information, with each server priority list corresponding to different setting information which may be provided by a mobile terminal device 100. For example, a server priority list may be generated for a certain set of possible settings (e.g. country, mobile carrier, operating system platform, etc.) and may be optimized based on connection quality information associated with the set of possible settings, using an optimization algorithm such as Upper Confidence Bound.

In an example, server priority list generating module 452 may generate a separate server priority list for each type of operating system, for example a server priority list for mobile terminal devices using iOS, a separate server priority list for mobile terminal devices using Android and a separate server priority list for mobile terminal devices using Tizen, etc.

In an example, server priority list generating module 452 may generate each server priority list for a particular common scenario for the mobile terminal devices.

For example, if a country has a plurality of the servers 120 of the distributed server arrangement located therein, and if there is a clear order of which servers provide the better expected connection quality (perhaps due to variation of the quality of the Internet infrastructure within the country), then a single server priority list can be generated for provision to all mobile terminal devices that are estimated to be in that country.

In an example, if an approximate number of mobile terminal devices with the application 320 are known to be located in a city with five nearby servers 120 of the distributed server arrangement, five server priority lists can be generated each listing a different one of the nearby servers as first in the connection order, the server priority lists being intended to each be provided to a fifth of the mobile terminal devices in the city. This has the effect of preserving load balance between the nearby servers even if, for example, a disproportionate number of mobile terminal devices become geographically close to one of the nearby servers, as could happen in the case of a sports event for example.

The server priority list generating module 452 need not be present in all servers 120. Instead, only one server 120 (or a subset of the servers 120) need have the server priority list generating module 452 and the generated server priority list(s) may be notified to other servers by the data distribution module 410.

The setting receiving module 456 is configured to perform one or more processes to receive setting information from the setting providing functionality 362 of an application 320. As described above, the setting information includes one or more of information identifying an operating system platform of the mobile terminal device 100, a language setting, a country code, and a type of the wireless network 110 that the mobile terminal device is using. Additionally, the setting receiving module 456 may be configured to derive further setting information based on the received setting information. By way of non-limiting example, in some instances, the received setting information may include a language setting of the mobile terminal device based on which the setting receiving module may derive an estimated location. In other instances, the setting receiving module 456 derives a country of the mobile terminal device based on the originating IP address of the received setting information.

The setting receiving module 456 is configured to store received setting information and any derived setting information in setting storage 457. The stored setting information may be notified to other servers 120 by the data distribution module 410.

The server priority list providing module 458 is configured to perform one or more processes to provide a server priority list stored in the server priority list storage 454 to the server priority list receiving functionality 364 of an application 320 in a mobile terminal device 100.

In a non-limiting example, the server priority list provided to each of the selected mobile terminal devices 100 is selected by the server priority list providing module 458 based on a degree of correspondence between an estimated location of the mobile terminal device and a particular geographical area for which the server priority list was generated.

However, the server priority list providing module 458 may select the server priority list in other ways. For example, in accordance with other examples of the server priority list generating module 452 as described above, the server priority list may be additionally or alternatively selected based on a degree of correspondence between the setting information provided by the mobile terminal device to the setting receiving module 456, or setting information derived therefrom, and setting information associated with the server priority list(s) in the server priority list storage 454.

The connection establishing module 460 is configured to perform one or more processes to establish a connection with a mobile terminal device 100 that requests connection to the distributed server arrangement via the server 120. A connection request to the server 120 is made by the mobile terminal device 100 based on a server priority list and the connection establishing module 460 is configured to, when the server 120 receives a connection request, establish a connection with the mobile terminal device 100 as the connection to the distributed server arrangement.

Additionally, in a non-limiting example, the connection establishing module 460 is configured to, after establishing a connection with a mobile terminal device 100, cause the server priority list providing module 458 to provide an updated server priority list to the mobile terminal device 100. In such a case, each time the mobile terminal device establishes a connection with the distributed server arrangement, the mobile terminal device 100 receives a new server priority list from the distributed server arrangement that should be used the next time the mobile terminal device needs to establish a connection to the distributed server arrangement. This can be contrasted with a conventional service discovery solution, wherein the mobile terminal device must make a separate request to a fixed registry server in order to identify a server for establishing a connection in order to exchange application data.

Furthermore, in a non-limiting example, the connection establishing module 460 may, at the same time as causing the provision of a server priority list to the mobile terminal device 100, cause the probing list providing module 432 to provide a probing list to the mobile terminal device.

The application data exchanging module 462 is configured to perform one or more processes for transmitting and receiving application data to and from the application 320 on a mobile terminal device 100 with which a connection has been established, and serves as an intermediary for communication of application data between the application module 420 and the application 300. Non-limiting examples of the application data exchanged by the application data exchanging module are described above for the application data exchanging functionality 370 of the application 320.

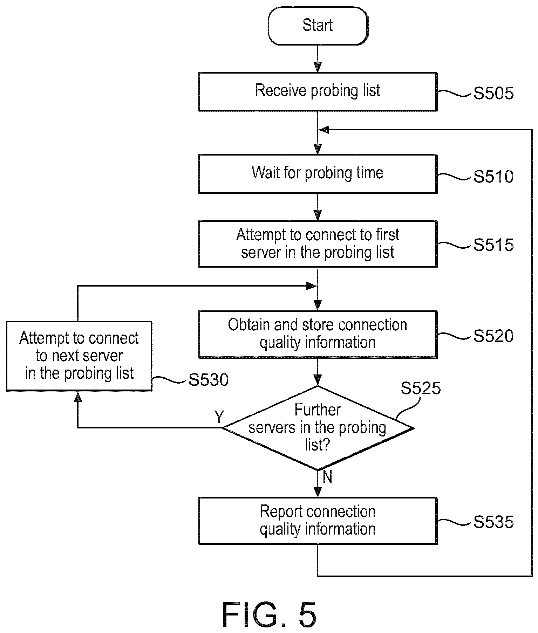

The processing operations in a probing process performed by an application 320 on a mobile terminal device 100 for obtaining connection quality information for servers 120 in the distributed server arrangement will now be described with reference to Figure 5.

Referring to Figure 5, at step S505, the probing list receiving functionality 342 on the mobile terminal device 100 receives a probing list from a server 120 of the distributed server arrangement and stores the probing list in the probing list storage 344. As described above, the probing list comprises an ordered list of servers 120 of the distributed server arrangement and may include configuration information indicating a probing interval of time between each performance of the probing process and a value indicating a number of times to perform the probing process for each server 120 in the probing list. For simplicity, in the probing process shown in Figure 5, it is assumed that the value indicates that the probing process should be performed once to probe each server in the probing list.

At step S510, the probing functionality 340 waits for a probing time determined in accordance with the configuration information included with the probing list or waits for a preconfigured time if no configuration information is received with the probing list. Alternatively, if configuration information is not included in the probing list, then the probing time may be immediate. The probing time may be additionally determined based on real-time network connectivity and network usage of the mobile terminal device 100.

At step S515, the connection probing functionality 346 attempts to connect to the first server in the probing list. In a non-limiting example, a connection attempt is an HTTP GET request for a URL of the server provided for this probing purpose. However, as described above, a connection attempt may be made in a different way. At the same time as the connection request is transmitted, the connection probing functionality 346 starts a response timer.

At step S520, the connection probing functionality 346 obtains and stores connection quality information for the first server in the connection quality information storage 348. In a non-limiting example, the connection probing functionality 346 receives an HTTP status based on the GET request, which is an HTTP success status code in the case of a successful attempt, or an HTTP error code in the case of a failed attempt. Upon receiving the HTTP status, the connection probing functionality 346 stops the response timer and determines a response time for the first server. If no HTTP status is received before the response timer reaches a threshold, then the timer is stopped at the threshold and an error value is used as the HTTP status. The HTTP status and response time are stored as connection quality information in the connection quality information storage 348.

At step S525, the probing functionality 340 determines whether all probing has been completed in accordance with the probing list. In particular, the probing functionality 340 determines whether connection quality information has been obtained for all servers in the probing list.

If it is determined at step S525 that there are further servers in the probing list for which connection quality information has not been obtained, the process continues at step S530, in which the connection probing functionality 346 attempts to connect to the next server in the probing list. The process then returns to step S520 in which the connection probing functionality 346 obtains and stores connection quality information for the next server, in the connection quality information storage 348.

If it is determined at step S525 that all probing has been completed in accordance with the probing list, the process continues at step S535 in which the connection quality information reporting functionality 350 reports the connection quality information stored in the connection quality information storage 348 to the distributed server arrangement.

If the connection quality information reporting functionality 350 fails to report the connection quality information at step S535, then the connection quality information may be queued and the connection quality information reporting functionality may retry to report the connection quality information until the reporting is successful, until a predetermined number of retries have been attempted or until a predetermined time has elapsed.

After step S535, the process continues at step S510 in which the probing functionality 340 waits for a next probing time. Thus, the probing is repeated an arbitrary number of times until a new probing list is received. In an alternative example, the process ends after a fixed number of iterations of step S535, which may be one iteration.

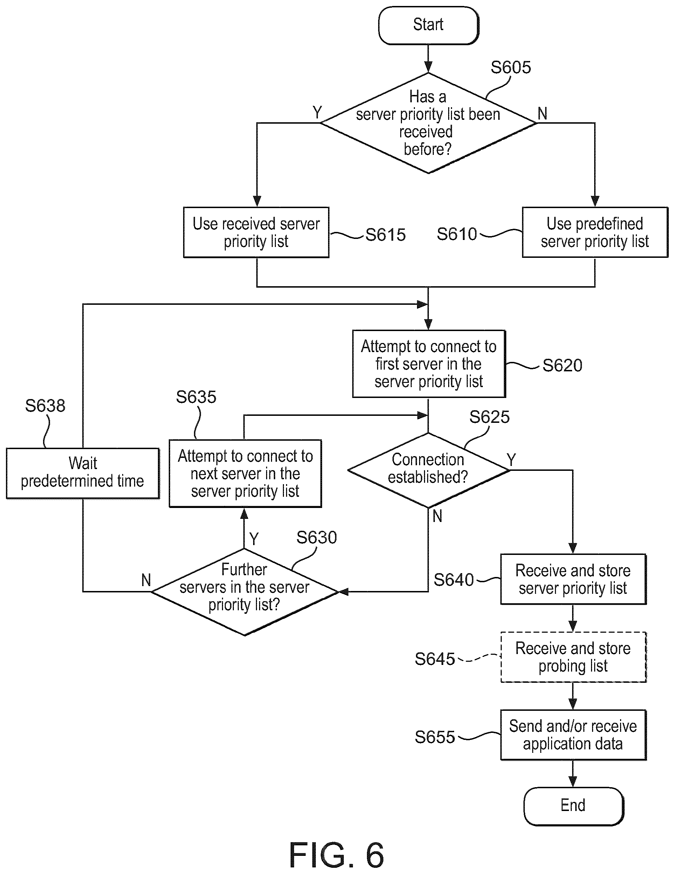

The processing operations in a connecting process performed by an application 320 on a mobile terminal device 100, for establishing a connection between the application 320 and a server 120 in the distributed server arrangement, will now be described with reference to Figure **6****.** The connecting process of Figure 6 may be performed before, after, or simultaneously with the probing process of Figure 5, and one or more of the steps of the connecting process may be the same as steps in the probing process. The probing process and the connecting process should therefore not necessarily be understood to be mutually exclusive.

Referring to Figure 6, at step S605, the connecting functionality 360 of an application 320 determines whether or not a server priority list that has been previously received from the distributed server arrangement is stored in the server priority list storage 366.

If it is determined at step S605 that a server priority list has not been previously received from the distributed server arrangement and stored, the process continues at step S610, in which the connecting functionality identifies a server priority list predefined in the application 320 (for example, included in the instructions defining the application 320 or stored in the server priority list storage 366 when the application 320 is initially downloaded to the mobile terminal device 100) to use as the server priority list to be used for establishing a connection between the application 320 and a server 120 in a distributed server arrangement. By way of non-limiting example, a plurality of server priority lists may be predefined in the application 320, comprising a respective server priority list for each of a plurality of countries, and the connecting functionality 360 may choose one of the lists based on the language setting of the mobile terminal device. For example, if the language setting is Chinese, the connecting functionality 360 may choose the server priority list for China.

On the other hand, if it is determined at step S605 that a server priority list has been previously received from the distributed server arrangement, the process continues at step S615, in which the connecting functionality 360 identifies a server priority list stored in the server priority list storage 366 as the server priority list to be used for establishing a connection between the application 320 and a server 120 in a distributed server arrangement.

After step S610 or S615 is performed, the process continues at step S620, in which the connection establishing functionality 368 transmits a connection request to attempt to connect to the first server in the server priority list according to the connection order defined by the server priority list. By way of non-limiting example, the connection request may be an HTTP POST request. Setting information provided by the setting providing functionality 362 may be included with the connection request that is transmitted at step S620. By way of non-limiting example, the setting information may comprise a language setting of the mobile terminal device 100.

At the same time as transmitting the connection request, the connection establishing functionality 368 starts a timeout timer.

At step S625, the connection establishing functionality 368 determines whether a connection has been established in response to the connection attempt. In a non-limiting example, successful establishment of a connection is determined based on reception of a HTTP success status code, and non-establishment of a connection is determined based on reception of an HTTP error status code (which may be a timeout code) or failure to receive a response before the timeout timer reaches a failure threshold.

If it is determined at step S625 that a connection has not been established, the process continues at step S630 in which the connection establishing functionality 368 determines whether there are any further servers in the server priority list for which a connection attempt has not yet been made.

If it is determined at step S630 that there are further servers in the server priority list for which a connection attempt has not yet been made, the process continues at step S635, in which the connection establishing functionality 368 attempts to connect to the next server in the server priority list according to the connection order. Step S635 may be performed in the same way as step S620. As in step S620, setting information may be included in the connection request transmitted at step S630 and, by way of non-limiting example, the setting information may comprise a language setting of the mobile terminal device. The process then returns to step S625 in which the connection establishing functionality 346 determines whether a connection has been established for the next server in the server priority list.

If it is determined at step S630 that an attempt has been made to establish a connection with all servers in the server priority list, the process waits for a predetermined time at step S638 and then continues at step S620 in which the connection establishing functionality 368 restarts the process of attempting to connect to each server in the server priority list according to the connection order.

Referring back to step S625, if it is determined at step S625 that the attempt to connect to a server was successful, then the process continues at step S640 in which the server priority list receiving functionality 364 receives an updated server priority list from the distributed server arrangement and stores the received server priority list in the server priority list storage 366. In a non-limiting example, in a case where the setting information was transmitted in step S620 or step S635, the server priority list received in step S640 may be a server priority list which has been determined according to the language setting included in the connection request.

At step S645, the probing list receiving functionality 342 may receive a probing list and store the probing list in the probing list storage 344. However, the probing list may be received from the distributed server arrangement at a different time, for example as shown in Fig. 5. Furthermore, the distributed server arrangement may not provide a probing list to all applications and/or all mobile terminal devices, and therefore step S645 may be omitted if the probing list is provided at a different time or if the application and/or mobile terminal device is not provided with a probing list. Accordingly, step S645 is optional and may be omitted.

At step S655, the application data exchanging functionality 370 sends and/or receives application data to and/or from the application data exchanging module 462 of the server.

The order of steps S640, S645 and S655 is illustrated in Figure 6 by way of non-limiting example, and the steps of receiving a server priority list, optionally receiving a probing list, and sending and/or receiving application data can be performed in any order or combination. In a non-limiting example, steps S640, S645 and S655 may be performed at the same time as step S620 or step S635 by the mobile terminal device/application 320 sending the application data to the server with an HTTP POST request at step S620 or S635 and receiving in reply an HTTP success code together with the server priority list, any application data from the server and optionally a server probing list.

Having described processing operations performed by an application 320, processing operations performed by the distributed server arrangement will now be described.

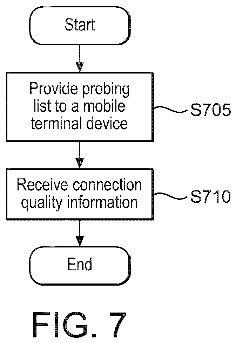

Figure 7 shows processing operations performed by the distributed server arrangement for obtaining connection quality information about servers of the distributed server arrangement. These processing operations correspond to the probing process performed by an application 320 as shown in Figure 5.

Referring to Figure 7, in step S705, the probing list providing module 436 of a server 120 of the distributed server arrangement provides a probing list to an application 320 on a mobile terminal device 100. As described above, in a non-limiting example, the probing list may be selected based on a degree of correspondence between the estimated location of the mobile terminal device and a location associated with the probing list.

After the application 320 has performed probing using the probing list and has obtained connection quality information, in step S710 the connection quality information receiving module 438 of a server 120 of the distributed server arrangement receives the connection quality information from the application 320 and stores it in the connection quality information storage 440.

The servers which perform steps S705 and S710 need not be the same server. As described above, connection quality information can be shared among the servers of the distributed server arrangement using the data distribution module 410.

The processing operations of Figure 7 are performed for each of a plurality of mobile terminal devices 100 (but not necessarily all of the mobile terminal devices) in order to obtain connection quality information from the application 320 of each mobile terminal device.

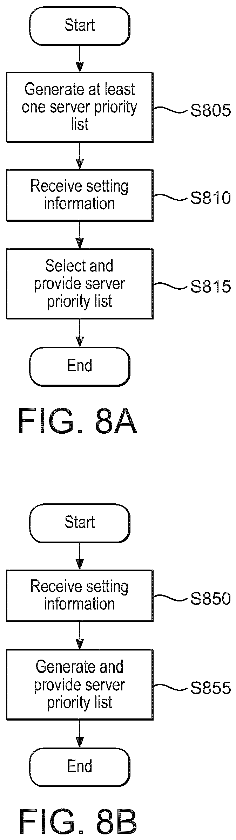

A first example of processing operations performed by the distributed server arrangement, for providing a server priority list to an application 320 on a mobile terminal device 100, will now be described with reference to Figure 8A.

Referring to Figure 8A, in step S805, the server priority list generating module 452 of a server 120 of the distributed server arrangement generates at least one server priority list based on the connection quality information reported from a plurality of mobile terminal devices 100 and stored in the connection quality information storage 440. The process used to generate the one or more server priority lists by the server priority list generating module 452 is not limited, and some non-limiting examples will now be described.

In an example, the one or more server priority lists are generated using connection quality information obtained by multiple different mobile terminal devices.

In an example, the server priority lists identify servers 120 of the distributed server arrangement which are located within respective geographical areas, wherein the servers 120 of each server priority list are ordered by increasing average latency in the connection quality information. More specifically, as described above, the connection quality information for a server 120 may include a response time (latency) indicating a time between the application 320 on a mobile terminal device 100 attempting to connect to the server 120 and a connection being established between the application 320 and the server 120. An average latency for each server 120 may be calculated based on one or more mobile terminal devices 100 reporting connection quality information multiple times for the server 120.

In an example, the one or more server priority lists is generated for a particular mobile terminal device 100. If the particular mobile terminal device 100 has previously reported connection quality information for a probing list of servers 120, the server priority list may be generated to include the same servers 120 as the probing list. The server priority list may be sorted according to response times indicated for the respective servers 120 in the connection quality information. If the particular mobile terminal device has reported connection quality information multiple times, the server priority list may be generated based on average response times indicated for the respective servers 120. Average response times may be moving average response times, calculated for a predetermined number of times that the mobile terminal device has reported connection quality information.

In an example, the server priority list generating module 452 may generate server priority lists based on the connection quality information, with each server priority list corresponding to different setting information which may be provided by a mobile terminal device 100. For example, a server priority list may be generated for a certain set of possible settings (e.g. country, mobile carrier, operating system platform, etc.) and may be optimized based on connection quality information associated with the set of possible settings, using an optimization algorithm such as Upper Confidence Bound.

In an example, server priority list generating module 452 may generate a separate server priority list for each type of operating system, for example a server priority list for mobile terminal devices using iOS, a separate server priority list for mobile terminal devices using Android and a separate server priority list for mobile terminal devices using Tizen, etc.

In an example, server priority list generating module 452 may generate each server priority list for a particular common scenario for the mobile terminal devices.

For example, if a country has a plurality of the servers 120 of the distributed server arrangement located therein, and if there is a clear order of which servers provide the better expected connection quality (perhaps due to variation of the quality of the Internet infrastructure within the country), then a single server priority list can be generated for provision to all mobile terminal devices that are estimated to be in that country.

In an example, if an approximate number of mobile terminal devices with the application 320 are known to be located in a city with five nearby servers 120 of the distributed server arrangement, five server priority lists can be generated each listing a different one of the nearby servers as first in the connection order, the server priority lists being intended to each be provided to a fifth of the mobile terminal devices in the city. This has the effect of preserving load balance between the nearby servers even if, for example, a disproportionate number of mobile terminal devices become geographically close to one of the nearby servers, as could happen in the case of a sports event for example.

In step S810, the setting receiving module 456 of a server 120 of the distributed server arrangement receives setting information from the setting providing functionality 362 of a mobile terminal device 100. The setting information may include one or more of information identifying an operating system platform, a language setting, a country code, and a type of the wireless network 110 that the mobile terminal device is using. In a non-limiting example, the setting information may include information identifying a language setting. The language setting may be provided every time or only when the distributed server arrangement has not previously provided a server priority list to the application 320 on the mobile terminal device 100.

In step S815, the server priority list providing module 458 of the server 120 selects a server priority list stored in the server priority list storage 454 and provides the selected server priority list to the server priority list receiving functionality 364 of the application 320 in the mobile terminal device 100. In an example, if setting information was received at step S810 from the mobile terminal device 100, the server priority list providing module 458 may select the server priority list using the setting information, by identifying a server priority list which was generated for a set of possible settings that correspond to the setting information received at step S810. In an example, the server priority list may be selected based on the language setting. However, the server priority list providing module 458 may select the server priority list in other ways. For example, if setting information was not received at step S810 from the mobile terminal device 100, the server priority list providing module 458 may select the server priority list based on a degree of correspondence between an estimated location of the mobile terminal device (derived, for example, from an IP address from which the mobile terminal device communicated with the server) and a particular geographical area for which a server priority list was generated.

The server 120 which performs step S805 and the server 120 which performs steps S810 and S815 need not be the same server. The generated server priority lists can be shared among the servers of the distributed server arrangement using the data distribution module 410.

A second example of processing operations performed by the distributed server arrangement, for providing a server priority list to an application 320 on a mobile terminal device 100, will now be described with reference to Figure 8B.

Referring to Figure 8B, optionally, in step S850, the setting receiving module 456 of a server 120 of the distributed server arrangement may receive setting information from the setting providing functionality 362 of a mobile terminal device. The setting information may include one or more of information identifying an operating system platform, a language setting, a country code, and a type of the wireless network 110 that the mobile terminal device is using. In a non-limiting example, the setting information may include information identifying a language setting. The language setting may be provided every time or only when the distributed server arrangement has not previously provided a server priority list to the application 320 on the mobile terminal device 100.

In step S855, the server priority list generating module 452 of the server 120 of the distributed server arrangement generates a server priority list based on the connection quality information reported from a plurality of mobile terminal devices and stored in the connection quality information storage 440, and (optionally) based on the setting information received by the setting receiving module 456.

In an example, the server priority list is generated using connection quality information obtained by multiple different mobile terminal devices.

In an example, the server priority list identifies servers 120 of the distributed server arrangement which are located within respective geographical areas, wherein the servers 120 of each server priority list are ordered by increasing average latency in the connection quality information. More specifically, as described above, the connection quality information for a server 120 may include a response time (latency) indicating a time between the application 320 on a mobile terminal device 100 attempting to connect to the server 120 and a connection being established between the application 320 and the server 120. An average latency for each server 120 may be calculated based on one or more mobile terminal devices 100 reporting connection quality information multiple times for the server 120.

In an example, the server priority list is generated for the mobile terminal device 100. If the mobile terminal device 100 has previously reported connection quality information for a probing list of servers 120, the server priority list may be generated to include the same servers 120 as the probing list. The server priority list may be sorted according to response times indicated for the respective servers 120 in the connection quality information. If the mobile terminal device has reported connection quality information multiple times, the server priority list may be generated based on average response times indicated for the respective servers 120. Average response times may be moving average response times, calculated for a predetermined number of times that the mobile terminal device has reported connection quality information.

In an example, the server priority list generating module 452 may generate a server priority list based on the connection quality information and setting information which has been provided by the mobile terminal device 100. For example, a server priority list may be optimized based on connection quality information associated with the setting information provided by the mobile terminal device 100, using an optimization algorithm such as Upper Confidence Bound.

In an example, server priority list generating module 452 may generate a server priority list for a particular common scenario for the mobile terminal devices.

For example, if a country has a plurality of the servers 120 of the distributed server arrangement located therein, and if there is a clear order of which servers provide the better expected connection quality (perhaps due to variation of the quality of the Internet infrastructure within the country), then a single server priority list can be generated for provision to all mobile terminal devices that are estimated to be in that country.

In an example, if an approximate number of mobile terminal devices with the application 320 are known to be located in a city with five nearby servers 120 of the distributed server arrangement, five server priority lists can be generated each listing a different one of the nearby servers as first in the connection order, the server priority lists being intended to each be provided to a fifth of the mobile terminal devices in the city. This has the effect of preserving load balance between the nearby servers even if, for example, a disproportionate number of mobile terminal devices become geographically close to one of the nearby servers, as could happen in the case of a sports event for example.

In an example, a geographical area in which the mobile terminal device is located is estimated for example using an IP address from which the mobile terminal device communicated with the server and/or using the language setting, and the server priority list identifies servers 120 which are located within the geographical area. The server priority list providing module 458 provides the server priority list to the server priority list receiving functionality 364 of the application 320 in the mobile terminal device 100.

Additionally, in step S855, the server priority list providing module 458 of the server 120 provides the selected server priority list to the server priority list receiving functionality 364 of the application 320 in the mobile terminal device 100.

The server 120 which performs step S850 and the server 120 which performs step S855 need not be the same server. The generated server priority lists can be shared among the servers of the distributed server arrangement using the data distribution module 410.

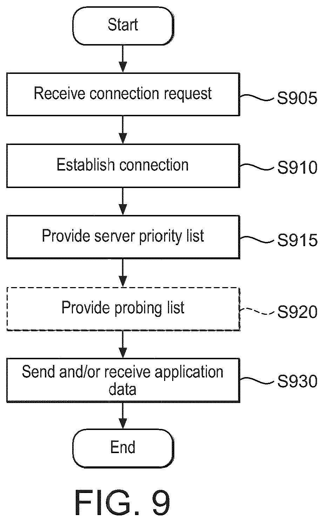

Processing operations performed by a server 120 in the distributed server arrangement, for establishing and utilising a connection between an application 320 on a mobile terminal device 100 and the distributed server arrangement, will now be described with reference to Figure 9. These processing operations correspond to the connecting process performed by a mobile terminal device 100 as shown in Fig. 6.

Referring to Figure 9, at step S905, the server 120 receives a connection request from the connection establishing functionality 368 of the application 320 on the mobile terminal device 100. The connection request may, for example, be an HTTP POST request, although other types of connection request are possible. The connection request may include setting information. As described above, the setting information may include one or more of information identifying an operating system platform of the mobile terminal device 100, a language setting, a country code, and a type of the wireless network 110 that the mobile terminal device 100 is using. Additionally, the setting receiving module 456 may derive further information based on the received setting information. For example, in a case where a predefined server priority list was identified at the mobile terminal device 100 to use as a server priority list for establishing a connection to the distributed server arrangement (for example, as described above with reference to step S610 in Figure 6), the setting information may include a language setting of the mobile terminal device, and the setting receiving module 456 may derive an estimated location of the mobile terminal device 100 based on the language setting. For example, in a case where the language setting is Chinese, the setting receiving module may estimate that the mobile terminal device 100 is located in China. In another example, the setting receiving module 456 may derive a country of the mobile terminal device 100 based on the originating IP address of the received connection request.

At step S910, the connection establishing module 460 of the server establishes a connection with the application 320 on the mobile terminal device 100.

At step S915, the server priority list providing module 458 provides a server priority list to the server priority list receiving functionality 364 of the application 320 on the mobile terminal device 100. Example implementations of the server priority list providing module 458 providing a server priority list are described above with reference to Figures 8A and 8B. In an example, a server priority list may be provided every time a connection is established, so that the system of the invention reacts dynamically to changes in current network state and changes in the location of the mobile terminal device.

At step S920, the probing list providing module 436 may provide a probing list to the probing list receiving functionality 342 of the application 320. However, the probing list may be provided at a different time, for example as shown in Fig. 5. Furthermore, the probing list providing module 436 may not provide a probing list to all applications and/or all mobile terminal devices, and therefore step S920 may be omitted if the probing list is provided at a different time or if the application and/or mobile terminal device is not to be provided with a probing list. Accordingly, step S920 is optional and may be omitted.

At step S930, the application data exchanging module 462 sends and/or receives application data to and/or from the application data exchanging functionality 370 of the application 320.

The order of steps S915, S920, S925 and S930 is purely an example, and the steps of providing a server priority list, optionally providing a probing list, and sending and/or receiving application data can be performed in any order or combination. The steps could, for example, be performed in parallel. In an example, steps S915, S920and S930 may be performed together with steps S905 and S910, such that the time to provide the application 320 with a server priority list, the time to provide the application 320 with any application date, the time to receive any application data from the application 320 and, optionally, the time to provide the application 320 with a probing list can each be reduced in case the connection is maintained for only a short time. By way of non-limiting example, the connection request received at step S905 may be an HTTP POST request with any application data from the application 320 and any setting information. In response to the HTTP POST request, the server may send an HTTP success code with a server priority list, any application data that is to be provided to the application 320 and any probing list that is to be provided to the application 320.

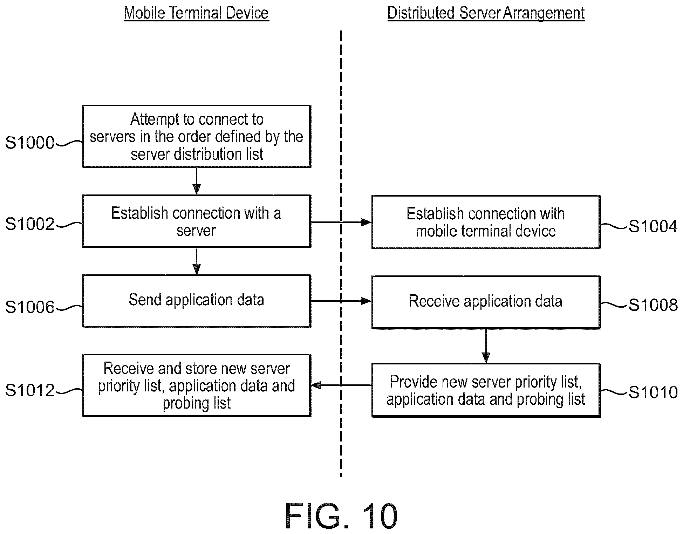

A non-limiting example of processing operations performed by a mobile terminal device 100 and a distributed server arrangement will now be described with reference to Figure 10. These operations may reduce connection establishment time, reduce the time to exchange information, improve connection quality and/or improve connection stability between the mobile terminal device and the distributed server arrangement.

Within Figure 10, the identity of the apparatus performing each processing operation can be determined from the heading at the top of the column in which the processing operation is shown.

Although, for simplicity, Figure 10 shows only a single mobile terminal device 100 and does not show the internal structure of the distributed server arrangement, it should be understood that the processing operations occur in a system comprising a plurality of terminal devices and a distributed server arrangement comprising a plurality of servers, for example as discussed above.

Referring to Figure 10, at step S1000, the application 320 on a mobile terminal device 100 attempts to establish a connection with the distributed server arrangement by attempting to connect to servers 120 in the order defined by the current server distribution list on the mobile terminal device, until a connection is established with one of the servers 120 at steps S1002 and S1004.

Examples of the processing operations that could be performed at steps S1000 and S1002 are described for example with reference to Figure 6, steps S6620, S625, S630, S635 and S638. Examples of the processing operations that could be performed at step S1004 are described for example with reference to Figure 9, steps S905 and S910.

At step S1006, the application 320 on the mobile terminal device sends application data to the server 120, which receives the application data at step S1008.

Examples of the processing operations that could be performed at step S1006 are described for example with reference to Figure 6, step S655. Examples of the processing operations that could be performed at step S1008 are described for example with reference to Figure 9, step S930.

At step S1010, the server 120 sends a new server priority list to the application 320, as well as optionally application data (if any is to be sent) and optionally a new probing list (if one is to be sent), and these are received by the application at step S1012.

Examples of the processing operations that could be performed at step S1010 are described for example with reference to Figure 9, steps S915, S920 and S930. Examples of the processing operations that could be performed at step S1012 are described for example with reference to Figure 6, steps S640, S645 and S655.

It should be noted that the order of the steps in Figure 10 is purely an example, and some of the steps could be performed in a different order and/or in parallel. By way of mon-limiting example, steps S1000, S1002, S1004, S1006 and S1008 could be performed by the application 320 and mobile terminal device 100 sending an HTTP POST request with application data from the application 320 to a server 120. Steps S1010 and S1012 may be performed by the server 120 responding to the HTTP POST request by sending an HTTP success code to the mobile terminal device 100 with a new server priority list, any application data that is to be provided from the distributed server arrangement to the application 320 and any probing list that is to be provided from the distributed server arrangement to the application 320.

By using one single established connection to provide a server priority list, provide any probing list, and exchange any application data, the total time required for the connection can be reduced, and the probability of completing all required communications, before a user ends the application session on the mobile terminal device, is improved.

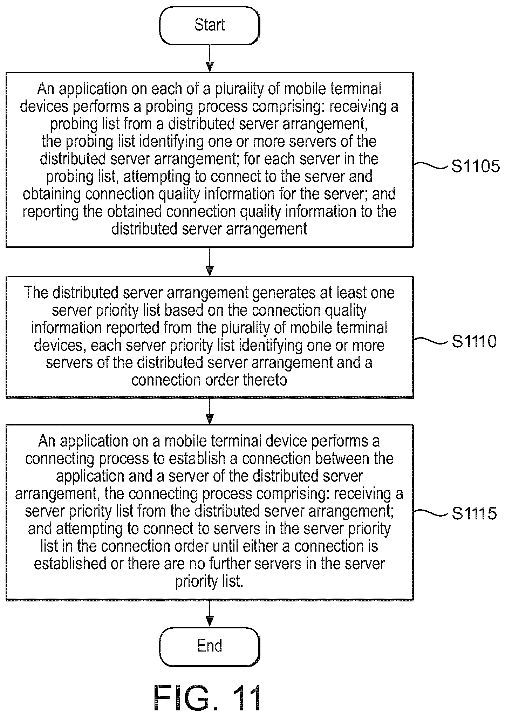

It will be appreciated from the description above that certain example embodiments perform processing operations to effect a method for establishing a connection between an application running on a mobile terminal device in a wireless network and a distributed server arrangement comprising a plurality of servers each deployed in a different geographical location as shown in Figure 11.

Referring to Figure 11, at step S1105, an application on each of a plurality of mobile terminal devices performs a probing process comprising: receiving a probing list from the distributed server arrangement, the probing list identifying one or more servers of the distributed server arrangement; for each server in the probing list, attempting to connect to the server and obtaining connection quality information for the server; and reporting the obtained connection quality information to the distributed server arrangement.

At step S1110, the distributed server arrangement generates at least one server priority list based on the connection quality information reported from the plurality of mobile terminal devices, each server priority list identifying one or more servers of the distributed server arrangement and a connection order thereto.

At step S1115, an application on a mobile terminal device performs a connecting process to establish a connection between the application and a server of the distributed server arrangement, the connecting process comprising: receiving a server priority list from the distributed server arrangement; and attempting to connect to servers in the server priority list in the connection order until either a connection is established or there are no further servers in the server priority list.

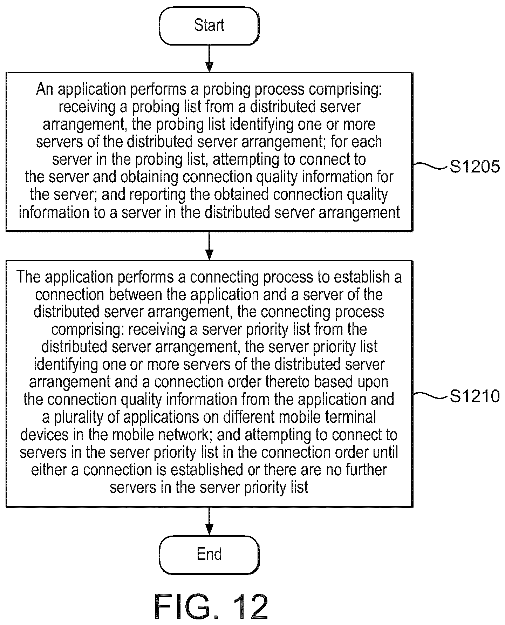

It will also be appreciated from the description above that certain example embodiments perform processing operations to effect a method performed by an application running on a mobile terminal device in a wireless network for establishing a connection between the application and a distributed server arrangement comprising a plurality of servers each deployed in a different geographical location as shown in Figure 12.

Referring to Figure 12, at step S1205, the application performs a probing process comprising: receiving a probing list from the distributed server arrangement, the probing list identifying one or more servers of the distributed server arrangement; for each server in the probing list, attempting to connect to the server and obtaining connection quality information for the server; and reporting the obtained connection quality information to a server in the distributed server arrangement.

At step S1210, the application performs a connecting process to establish a connection between the application and a server of the distributed server arrangement, the connecting process comprising: receiving a server priority list from the distributed server arrangement, the server priority list identifying one or more servers of the distributed server arrangement and a connection order thereto based upon the connection quality information from the application and a plurality of applications on different mobile terminal devices in the wireless network; and attempting to connect to servers in the server priority list in the connection order until either a connection is established or there are no further servers in the server priority list.

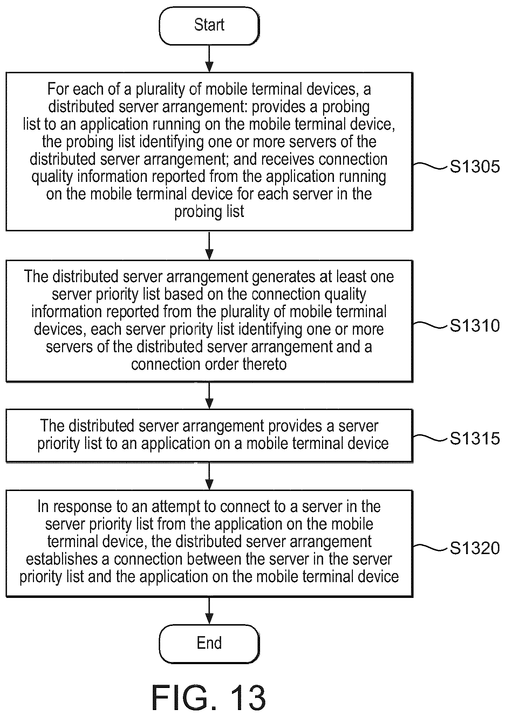

It will also be appreciated from the description above that certain example embodiments perform processing operations to effect a method performed by a distributed server arrangement comprising a plurality of servers each deployed in a different geographical location, for establishing a connection between an application running on a mobile terminal device in a wireless network and the distributed server arrangement as shown in Figure 13.

Referring to Figure 13, at step S1305, for each of a plurality of mobile terminal devices, the distributed server arrangement: provides a probing list to an application running on the mobile terminal device, the probing list identifying one or more servers of the distributed server arrangement; and receives connection quality information reported from the application running on the mobile terminal device for each server in the probing list.

At step S1310, the distributed server arrangement generates at least one server priority list based on the connection quality information reported from the plurality of mobile terminal devices, each server priority list identifying one or more servers of the distributed server arrangement and a connection order thereto.

At step S1315, the distributed server arrangement provides a server priority list to an application on a mobile terminal device.

At step S1320, in response to an attempt to connect to a server in the server priority list from the application on the mobile terminal device, the distributed server arrangement establishes a connection between the server in the server priority list and the application on the mobile terminal device.

### [Modifications]

Many modifications can be made to the example embodiments described above without departing from the scope of the present invention as defined by the appended claims.

For example, although mobile terminal devices 100 and servers 120 are illustrated in Fig. 1 at various geographical locations around the world, the system can be implemented in any region where a plurality of mobile terminal devices may be used, including, for example, within a particular continent, country or city.

In the examples described above, the application 320 installed on each mobile terminal device 100 includes probing functionality 340. However, it is not necessary that all applications 320 and/or all mobile terminal devices 100 perform probing. Accordingly, a modified version of the described application 320 may be installed on some mobile terminal devices 100, the modified version including the application functionality 330 and the connecting functionality 360, but not including the probing functionality 340.

In the above-described examples, the probing list and server priority list are separate lists, which are separately generated in the distributed server arrangement and separately provided to the mobile terminal device. However, in other examples, the server priority list may also be used as the probing list. In that case, the probing list receiving functionality 342 and probing list storage 344 of the application 320, and the probing list generating module 432, probing list storage 434 and probing list providing module 436 of the probing module 430 can be omitted. While using the server priority list as the probing list eliminates resources required for generating and providing the probing list, generating and providing separate probing and server priority lists has the advantage that connection quality information for a server 120 can be obtained before identifying that server in a server priority list as a server to use for establishing a connection with and communicating with the distributed server arrangement.

In the examples described above, when it is determined at step S630 that no further servers in the server priority list remain, the processing returns to step S620 after waiting for a predetermined time at step S638. This continues until a connection is established at step S625. However, as a modification, the number of times the processing returns from step S630 to S620 may be limited to a predetermined number of times. Alternatively, when it is determined for the first time at step S630 that no further servers in the server priority list remain, then the processing may end.

In the examples described above, the serves 120 may be connected to allow communication therebetween. However, as a modification, the servers 120 may all write data to, and read data from, at least one common data store. In this case, connection quality information reported to different servers 120 may be stored in the at least one common data store and read by one of the servers 120 to generate one or more server priority lists which is/are stored in the at least one common data store for distribution by any of the servers 120, as appropriate.

Having now described numerous example embodiments, it will be understood that, by comparison to a mobile terminal device 100 that performs probing itself and generates a server priority list itself from the resulting connection quality information, the example embodiments provide a number of advantages, including one or more of the following:
- An optimization algorithm implemented in the servers of the distributed server arrangement can be updated more quickly and reliably than an algorithm implemented only in a mobile terminal device. This means that different algorithms can be more easily applied to solving specific use cases (e.g. optimizing for lowest latency, optimizing for best connectability).
- The server priority list can be generated based on connection quality information obtained from multiple mobile terminal devices, and can take into account realtime network load and topology changes.
- The connection quality information can be aggregated to identify improvements to the network topology of the distributed server arrangement, such as geographical locations where even an optimal server priority list based on the current topology corresponds to poor connection quality information, where addition of a server to the distributed server arrangement would be advantageous.

## Claims

1. A system comprising:
a plurality of mobile terminal devices (100) in one or more wireless networks (110), each mobile terminal device having an application (320) thereon; and
a distributed server arrangement comprising a plurality of servers (120) each deployed in a different geographical location,
wherein:
the application (320) on each of the plurality of mobile terminal devices (100) is configured to:
receive a probing list from the distributed server arrangement, the server probing list identifying one or more servers of the distributed server arrangement;
for each server in the server probing list, attempt to connect to the server and obtain connection quality information for the server; and
report the obtained connection quality information to the distributed server arrangement;
the distributed server arrangement is configured to generate at least one server priority list based on the connection quality information reported from mobile terminal devices in the one or more wireless networks, each server priority list identifying one or more servers (120) of the distributed server arrangement and a connection order thereto; and
the application (320) on each of the plurality of mobile terminal devices (100) is configured to:
receive a server priority list from the distributed server arrangement; and
attempt to connect to servers in the server priority list in the connection order until either a connection between the application and a server of the distributed server arrangement is established or there are no further servers in the server priority list.

2. A system according to claim 1, wherein the connection quality information for each server (120) comprises at least one of:
a connection establishment status indicating whether a connection to the server was established, and
a connection establishment time indicating a time between attempting to connect to the server and establishing a connection to the server.

3. A system according to claim 1 or claim 2, wherein:
the distributed server arrangement is configured to generate a plurality of server priority lists;
the application (320) on each of the plurality of mobile terminal devices (100) is configured to provide information about a language setting of the mobile terminal device to the distributed server arrangement; and
the distributed server arrangement is configured to determine which of the plurality of server priority lists to provide to the mobile terminal device based upon the language setting of the mobile terminal device.

4. A system according to claim 1 or claim 2, wherein:
the application (320) on each of the plurality of mobile terminal devices (100) is configured to provide information about a language setting of the mobile terminal device to the distributed server arrangement; and
the distributed server arrangement is configured to generate a server priority list for the mobile terminal device based upon the language setting of the mobile terminal device.

5. A system according to any preceding claim, wherein the application (320) on each of the plurality of mobile terminal devices (100) is configured to, when a connection to a server in the server priority list, is established:
send application data to the server (120);
receive a new server priority list from the server (120);
optionally receive application data from the server (120); and
optionally receive a new probing list from the server (120).

6. A system according to claim 5, wherein the application (320) on each of the plurality of mobile terminal devices (100) is configured to:
send an HTTP POST request to connect to a server in the server priority list, the HTTP POST request including the application data from the application; and
in response to a successful connection with the HTTP POST request, receive from the server in the server priority list an HTTP success status code with the new server priority list, optionally the application data from the server and optionally the new probing list.

7. A method performed by an application (320) running on a mobile terminal device (100) in a wireless network (110) for establishing a connection between the application and a distributed server arrangement comprising a plurality of servers (120) each deployed in a different geographical location, the method comprising:
the application performing a probing process comprising:
receiving a probing list from the distributed server arrangement, the probing list identifying one or more servers of the distributed server arrangement;
for each server in the probing list, attempting to connect to the server and obtaining connection quality information for the server; and
reporting the obtained connection quality information to a server in the distributed server arrangement; and
the application performing a connecting process to establish a connection between the application and a server of the distributed server arrangement, the connecting process comprising:
receiving a server priority list from the distributed server arrangement, the server priority list identifying one or more servers of the distributed server arrangement and a connection order thereto based upon the connection quality information from the application and a plurality of applications on different mobile terminal devices in the wireless network; and
attempting to connect to servers in the server priority list in the connection order until either a connection is established or there are no further servers in the server priority list.

8. A method according to claim 7, wherein the connection quality information for each server comprises at least one of:
a connection establishment status indicating whether a connection to the server was established, and
a connection establishment time indicating a time between attempting to connect to the server and establishing a connection to the server.

9. A method according to claim 7 or claim 8, wherein the application (320):
provides information about a language setting of the mobile terminal device to the distributed server arrangement; and
receives the server priority list based upon the language setting of the mobile terminal device.

10. A method according to any of claims 7 to 9, wherein, when a connection to a server (120) in the server priority list is established in the connecting process, the application (320):
sends application data to the server;
receives a new server priority list from the server;
optionally receives application data from the server; and
optionally receives a new probing list from the server.

11. A method according to claim 10, wherein:
the application (320) sends an HTTP POST request to connect to a server (120) in the server priority list, the HTTP POST request including the application data from the application; and
in response to a successful connection with the HTTP POST request, the application receives from the server (120) an HTTP success status code with the new server priority list, optionally the application data from the server and optionally the new probing list.

12. A method performed by a distributed server arrangement comprising a plurality of servers (120) each deployed in a different geographical location, for establishing a connection between an application (320) running on a mobile terminal device (100) in a wireless network (110) and the distributed server arrangement, the method comprising:
for each of a plurality of mobile terminal devices (100), the distributed server arrangement:
providing a probing list to an application (320) running on the mobile terminal device, the probing list identifying one or more servers (120) of the distributed server arrangement; and
receiving connection quality information reported from the application running on the mobile terminal device for each server in the probing list; and
the distributed server arrangement:
generating at least one server priority list based on the connection quality information reported from the plurality of mobile terminal devices (100), each server priority list identifying one or more servers (120) of the distributed server arrangement and a connection order thereto;
providing a server priority list to an application (320) on a mobile terminal device (100); and
in response to an attempt to connect to a server (120) in the server priority list from the application (320) on the mobile terminal device (100), establishing a connection between the server in the server priority list and the application on the mobile terminal device.

13. A method according to claim 12, wherein the connection quality information for each server (120) comprises at least one of:
a connection establishment status indicating whether a connection to the server was established, and
a connection establishment time indicating a time between attempting to connect to the server and establishing a connection to the server.

14. A method according to claim 12 or claim 13, wherein:
the distributed server arrangement generates a plurality of server priority lists;
the distributed server arrangement receives information about a language setting of the mobile terminal device (100); and
the distributed server arrangement determines which of the plurality of server priority lists to provide to the mobile terminal device (100) based upon the language setting of the mobile terminal device.

15. A method according to claim 12 or claim 13, wherein:
the distributed server arrangement receives information about a language setting of the mobile terminal device (100); and
the distributed server arrangement generates a server priority list for the mobile terminal device (100) based upon the language setting of the mobile terminal device.

16. A method according to any of claims 12 to 15, wherein, when a connection between a server (120) of the distributed server arrangement in the server priority list and the application (320) on the mobile terminal device (100) is established, the server (120) of the distributed server arrangement in the server priority list:
receives application data from the application;
provides a new server priority list to the application;
optionally provides application data to the application; and
optionally provides a new probing list to the application.

17. A method according to claim 16, wherein
the server (120) in the server priority list receives an HTTP POST request from the mobile terminal device (100) as the mobile terminal device attempts to connect to the server, the HTTP POST request including the application data from the application (320); and
in response to a successful connection with the HTTP POST request, the server (120) sends to the application (320) an HTTP success status code with the new server priority list, optionally the application data from the server and optionally the new probing list.

18. A computer program defining an application to be run on a mobile terminal device, the computer program comprising instructions which, when executed by the mobile terminal device, cause the mobile terminal device to perform a method according to any of claims 7 to 11.

19. A computer program for a distributed server arrangement, the computer program comprising instructions which, when executed by the distributed server arrangement, cause the distributed server arrangement to perform a method according to any of claims 12 to 17.

## Patentansprüche

1. System, umfassend:
eine Vielzahl von mobilen Endgeräten (100) in einem oder mehreren drahtlosen Netzwerken (110), wobei jedes mobile Endgerät eine Anwendung (320) aufweist; und
eine verteilte Serveranordnung, die eine Vielzahl von Servern (120) umfasst, die jeweils an einem unterschiedlichen geografischen Standort eingesetzt sind,
wobei:
die Anwendung (320) auf jedem der Vielzahl von mobilen Endgeräten (100) so konfiguriert ist, dass sie
eine Sondierungsliste von der verteilten Serveranordnung empfängt, wobei die Serversondierungsliste einen oder mehrere Server der verteilten Serveranordnung angibt;
für jeden Server in der Serversondierungsliste versucht wird, eine Verbindung zum Server herzustellen und Informationen zur Verbindungsqualität für den Server zu erhalten; und
die erhaltenen Informationen zur Verbindungsqualität an die verteilte Serveranordnung übermittelt;
die verteilte Serveranordnung so konfiguriert ist, dass sie mindestens eine Serverprioritätenliste basierend auf den von mobilen Endgeräten in den einen oder mehreren drahtlosen Netzwerken gemeldeten Informationen zur Verbindungsqualität erzeugt, wobei jede Serverprioritätenliste einen oder mehrere Server (120) der verteilten Serveranordnung und eine Verbindungsreihenfolge dazu angibt; und
die Anwendung (320) auf jedem der Vielzahl von mobilen Endgeräten (100) so konfiguriert ist, dass sie
eine Serverprioritätenliste von der verteilten Serveranordnung empfängt; und
versucht, eine Verbindung zu Servern in der Serverprioritätenliste in der Verbindungsreihenfolge herzustellen, bis entweder eine Verbindung zwischen der Anwendung und einem Server der verteilten Serveranordnung hergestellt wird oder keine weiteren Server in der Serverprioritätenliste vorhanden sind.

2. System nach Anspruch 1, wobei die Informationen zur Verbindungsqualität für jeden Server (120) mindestens eines der folgenden umfassen:
einen Verbindungsaufbaustatus, der anzeigt, ob eine Verbindung zu dem Server hergestellt wurde, und
eine Verbindungsaufbauzeit, die eine Zeit zwischen dem Versuch, eine Verbindung zu dem Server herzustellen, und dem Herstellen einer Verbindung zu dem Server angibt.

3. System nach Anspruch 1 oder Anspruch 2, wobei:
die verteilte Serveranordnung so konfiguriert ist, dass sie eine Vielzahl von Serverprioritätenlisten erzeugt;
die Anwendung (320) auf jedem der Vielzahl von mobilen Endgeräten (100) so konfiguriert ist, dass sie Informationen über eine Spracheinstellung des mobilen Endgeräts an die verteilte Serveranordnung bereitstellt; und
die verteilte Serveranordnung so konfiguriert ist, dass sie basierend auf der Spracheinstellung des mobilen Endgeräts bestimmt, welche der Vielzahl von Serverprioritätenlisten dem mobilen Endgerät bereitgestellt werden.

4. System nach Anspruch 1 oder Anspruch 2, wobei:
die Anwendung (320) auf jedem der Vielzahl von mobilen Endgeräten (100) so konfiguriert ist, dass sie Informationen über eine Spracheinstellung des mobilen Endgeräts an die verteilte Serveranordnung bereitstellt; und
die verteilte Serveranordnung so konfiguriert ist, dass sie basierend auf der Spracheinstellung des mobilen Endgeräts eine Serverprioritätenliste für das mobile Endgerät erzeugt.

5. System nach einem vorstehenden Anspruch, wobei die Anwendung (320) auf jedem der Vielzahl von mobilen Endgeräten (100) so konfiguriert ist, dass sie, wenn eine Verbindung zu einem Server in der Serverprioritätenliste hergestellt ist,
Anwendungsdaten an den Server (120) sendet;
eine neue Serverprioritätenliste von dem Server (120) empfängt;
wahlweise Anwendungsdaten von dem Server (120) empfängt; und
wahlweise eine neue Sondierungsliste von dem Server (120) empfängt.

6. System nach Anspruch 5, wobei die Anwendung (320) auf jedem der Vielzahl von mobilen Endgeräten (100) so konfiguriert ist, dass sie
eine HTTP-POST-Anfrage sendet, um eine Verbindung zu einem Server in der Serverprioritätenliste herzustellen, wobei die HTTP-POST-Anfrage die Anwendungsdaten der Anwendung einschließt; und
als Reaktion auf eine erfolgreiche Verbindung mit der HTTP-POST-Anfrage von dem Server in der Serverprioritätenliste einen HTTP-Erfolgsstatuscode mit der neuen Serverprioritätenliste empfängt, wahlweise die Anwendungsdaten von dem Server und wahlweise die neue Sondierungsliste.

7. Verfahren, das von einer Anwendung (320), die auf einem mobilen Endgerät (100) in einem drahtlosen Netzwerk (110) ausgeführt wird, zur Herstellung einer Verbindung zwischen der Anwendung und einer verteilten Serveranordnung durchgeführt wird, die eine Vielzahl von Servern (120) umfasst, die jeweils an einem unterschiedlichen geografischen Standort eingesetzt sind, wobei das Verfahren umfasst:
die Anwendung die einen Sondierungsprozess durchführt, umfassend:
Empfangen einer Sondierungsliste von der verteilten Serveranordnung, wobei die Sondierungsliste einen oder mehrere Server der verteilten Serveranordnung angibt;
Versuchen, für jeden Server in der Sondierungsliste, eine Verbindung zu dem Server herzustellen, und Erhalten von Informationen zur Verbindungsqualität für den Server; und
Übermitteln der erhaltenen Informationen zur Verbindungsqualität an einen Server in der verteilten Serveranordnung; und
wobei die Anwendung einen Verbindungsaufbauprozess durchführt, um eine Verbindung zwischen der Anwendung und einem Server der verteilten Serveranordnung herzustellen, wobei der Verbindungsaufbauprozess Folgendes umfasst:
Empfangen einer Serverprioritätenliste von der verteilten Serveranordnung, wobei die Serverprioritätenliste einen oder mehrere Server der verteilten Serveranordnung und eine Verbindungsreihenfolge dazu angibt, basierend auf den Informationen zur Verbindungsqualität von der Anwendung und einer Vielzahl von Anwendungen auf unterschiedlichen mobilen Endgeräten in dem drahtlosen Netzwerk; und
Versuchen, in der Verbindungsreihenfolge eine Verbindung zu Servern in der Serverprioritätenliste herzustellen, bis entweder eine Verbindung hergestellt ist oder keine weiteren Server in der Serverprioritätenliste vorhanden sind.

8. Verfahren nach Anspruch 7, wobei die Informationen zur Verbindungsqualität für jeden Server mindestens eines der folgenden umfassen:
einen Verbindungsaufbaustatus, der anzeigt, ob eine Verbindung zu dem Server hergestellt wurde, und
eine Verbindungsaufbauzeit, die eine Zeit zwischen dem Versuch, eine Verbindung zu dem Server herzustellen, und dem Herstellen einer Verbindung zu dem Server angibt.

9. Verfahren nach Anspruch 7 oder Anspruch 8, wobei die Anwendung (320)
Informationen über eine Spracheinstellung des mobilen Endgeräts an die verteilte Serveranordnung bereitstellt; und
die Serverprioritätenliste, basierend auf der Spracheinstellung des mobilen Endgeräts, empfängt.

10. Verfahren nach einem der Ansprüche 7 bis 9, wobei, wenn im Verbindungsaufbauprozess eine Verbindung zu einem Server (120) in der Serverprioritätenliste hergestellt ist, die Anwendung (320):
Anwendungsdaten an den Server sendet;
eine neue Serverprioritätenliste von dem Server empfängt;
wahlweise Anwendungsdaten von dem Server empfängt; und
wahlweise eine neue Sondierungsliste von dem Server empfängt.

11. Verfahren nach Anspruch 10, wobei
die Anwendung (320) eine HTTP-POST-Anfrage sendet, um eine Verbindung zu einem Server (120) in der Serverprioritätenliste herzustellen, wobei die HTTP-POST-Anfrage die Anwendungsdaten der Anwendung einschließt; und
als Reaktion auf eine erfolgreiche Verbindung mit der HTTP-POST-Anfrage von dem Server (120) einen HTTP-Erfolgsstatuscode mit der neuen Serverprioritätenliste, wahlweise die Anwendungsdaten von dem Server und wahlweise die neue Sondierungsliste empfängt.

12. Verfahren, das von einer verteilten Serveranordnung ausgeführt wird, umfassend eine Vielzahl von Servern (120), die jeweils an einem unterschiedlichen geografischen Ort eingesetzt sind, zum Herstellen einer Verbindung zwischen einer auf einem mobilen Endgerät (100) in einem drahtlosen Netzwerk (110) laufenden Anwendung (320) und der verteilten Serveranordnung, wobei das Verfahren umfasst:
für jedes der Vielzahl von mobilen Endgeräten (100) ist die verteilte Serveranordnung ausgebildet, um:
einer auf dem mobilen Endgerät laufenden Anwendung (320) eine Sondierungsliste bereitzustellen, wobei die Sondierungsliste einen oder mehrere Server (120) der verteilten Serveranordnung angibt; und
die von der auf dem mobilen Endgerät laufenden Anwendung für jeden Server in der Sondierungsliste gemeldeten Informationen zur Verbindungsqualität zu empfangen; und
wobei die verteilte Serveranordnung
mindestens eine Serverprioritätenliste, basierend auf den von der Vielzahl von mobilen Endgeräten (100) gemeldeten Informationen zur Verbindungsqualität, zu erzeugen, wobei jede Serverprioritätenliste einen oder mehrere Server (120) der verteilten Serveranordnung und eine Verbindungsreihenfolge dazu angibt;
einer Anwendung (320) auf einem mobilen Endgerät (100) eine Serverprioritätenliste bereitzustellen; und
als Reaktion auf einen von der Anwendung (320) auf dem mobilen Endgerät (100) unternommenen Verbindungsversuch zu einem Server (120) in der Serverprioritätenliste eine Verbindung zwischen dem Server in der Serverprioritätenliste und der Anwendung auf dem mobilen Endgerät herzustellen.

13. Verfahren nach Anspruch 12, wobei die Informationen zur Verbindungsqualität für jeden Server (120) mindestens eines der folgenden umfassen:
einen Verbindungsaufbaustatus, der anzeigt, ob eine Verbindung zu dem Server hergestellt wurde, und
eine Verbindungsaufbauzeit, die eine Zeit zwischen dem Versuch, eine Verbindung zu dem Server herzustellen, und dem Herstellen einer Verbindung zu dem Server angibt.

14. Verfahren nach Anspruch 12 oder Anspruch 13, wobei:
die verteilte Serveranordnung eine Vielzahl von Serverprioritätenlisten erzeugt;
die verteilte Serveranordnung Informationen über eine Spracheinstellung des mobilen Endgeräts (100) empfängt; und
die verteilte Serveranordnung basierend auf der Spracheinstellung des mobilen Endgeräts bestimmt, welche der Vielzahl von Serverprioritätenlisten dem mobilen Endgerät (100) bereitzustellen ist.

15. Verfahren nach Anspruch 12 oder Anspruch 13, wobei:
die verteilte Serveranordnung Informationen über eine Spracheinstellung des mobilen Endgeräts (100) empfängt; und
die verteilte Serveranordnung, basierend auf der Spracheinstellung des mobilen Endgeräts, eine Serverprioritätenliste für das mobile Endgerät (100) erzeugt.

16. Verfahren nach einem der Ansprüche 12 bis 15, wobei, wenn eine Verbindung zwischen einem Server (120) der verteilten Serveranordnung in der Serverprioritätenliste und der Anwendung (320) auf dem mobilen Endgerät (100) hergestellt ist, der Server (120) der verteilten Serveranordnung in der Serverprioritätenliste:
Anwendungsdaten von der Anwendung empfängt;
der Anwendung eine neue Serverprioritätenliste bereitstellt;
wahlweise der Anwendung Anwendungsdaten bereitstellt; und
wahlweise der Anwendung eine neue Sondierungsliste bereitstellt.

17. Verfahren nach Anspruch 16, wobei
der Server (120) in der Serverprioritätenliste eine HTTP-POST-Anfrage von dem mobilen Endgerät (100) erhält, wenn das mobile Endgerät versucht, eine Verbindung zu dem Server herzustellen, wobei die HTTP-POST-Anfrage die Anwendungsdaten der Anwendung (320) einschließt; und
als Reaktion auf eine erfolgreiche Verbindung mit der HTTP-POST-Anfrage sendet der Server (120) an die Anwendung (320) einen HTTP-Erfolgsstatuscode mit der neuen Serverprioritätenliste, wahlweise die Anwendungsdaten von dem Server und wahlweise die neue Sondierungsliste.

18. Computerprogramm, das eine auf einem mobilen Endgerät auszuführende Anwendung definiert, wobei das Computerprogramm Anweisungen umfasst, die, wenn sie auf dem mobilen Endgerät ausgeführt werden, das mobile Endgerät veranlassen, ein Verfahren nach einem der Ansprüche 7 bis 11 auszuführen.

19. Computerprogramm für eine verteilte Serveranordnung, wobei das Computerprogramm Anweisungen umfasst, die, wenn sie auf der verteilten Serveranordnung ausgeführt werden, die verteilte Serveranordnung veranlassen, ein Verfahren nach einem der Ansprüche 12 bis 17 auszuführen.

## Revendications

1. Système comprenant :
une pluralité de dispositifs terminaux mobiles (100) dans un ou plusieurs réseaux sans fil (110), chaque dispositif terminal mobile présentant une application (320) ; et
un agencement de serveurs distribués comprenant une pluralité de serveurs (120) déployés chacun dans un emplacement géographique différent,
dans lequel :
l'application (320) sur chacun de la pluralité de dispositifs terminaux mobiles (100) est configurée pour :
recevoir une liste de sondage en provenance de l'agencement de serveurs distribués, la liste de sondage de serveurs identifiant un ou plusieurs serveurs de l'agencement de serveurs distribués ;
pour chaque serveur de la liste de sondage de serveurs, tenter de se connecter au serveur et obtenir des informations relatives à la qualité de connexion pour le serveur ; et
rapporter les informations relatives à la qualité de connexion obtenues à l'agencement de serveurs distribués ;
l'agencement de serveurs distribués est configuré pour générer au moins une liste de priorités de serveurs sur la base des informations relatives à la qualité de connexion rapportées par des dispositifs terminaux mobiles dans les un ou plusieurs réseaux sans fil, chaque liste de priorités de serveurs identifiant un ou plusieurs serveurs (120) de l'agencement de serveurs distribués et un ordre de connexion y afférent ; et
l'application (320) sur chacun de la pluralité de dispositifs terminaux mobiles (100) est configurée pour :
recevoir une liste de priorités de serveurs en provenance de l'agencement de serveurs distribués ; et
tenter de se connecter aux serveurs de la liste de priorités de serveurs, selon l'ordre de connexion, jusqu'à ce qu'une connexion entre l'application et un serveur de l'agencement de serveurs distribués soit établie ou jusqu'à ce que qu'il n'y ait plus de serveurs dans la liste de priorités de serveurs.

2. Système selon la revendication 1, dans lequel les informations relatives à la qualité de connexion pour chaque serveur (120) comprennent au moins l'un parmi :
un statut d'établissement de connexion indiquant si une connexion au serveur a été établie, et
un temps d'établissement de connexion indiquant une durée entre la tentative de connexion au serveur et l'établissement d'une connexion au serveur.

3. Système selon la revendication 1 ou la revendication 2, dans lequel :
l'agencement de serveurs distribués est configuré pour générer une pluralité de listes de priorités de serveurs ;
l'application (320) sur chacun de la pluralité de dispositifs terminaux mobiles (100) est configurée pour fournir des informations relatives à un paramètre de langue du dispositif terminal mobile à l'agencement de serveurs distribués ; et
l'agencement de serveurs distribués est configuré pour déterminer laquelle de la pluralité de listes de priorités de serveurs fournir au dispositif terminal mobile sur la base du réglage de langue du dispositif terminal mobile.

4. Système selon la revendication 1 ou la revendication 2, dans lequel :
l'application (320) sur chacun de la pluralité de dispositifs terminaux mobiles (100) est configurée pour fournir des informations relatives à un réglage de langue du dispositif terminal mobile à l'agencement de serveurs distribués ; et
l'agencement de serveurs distribués est configuré pour générer une liste de priorités de serveurs pour le dispositif terminal mobile sur la base du réglage de langue du dispositif terminal mobile.

5. Système selon une quelconque revendication précédente, dans lequel l'application (320) sur chacun de la pluralité de dispositifs terminaux mobiles (100) est configurée pour, lorsqu'une connexion à un serveur figurant dans la liste de priorités de serveurs est établie :
envoyer des données d'application au serveur (120) ;
recevoir une nouvelle liste de priorités de serveurs en provenance du serveur (120) ;
recevoir facultativement des données d'application en provenance du serveur (120) ; et
recevoir facultativement une nouvelle liste de sondage en provenance du serveur (120).

6. Système selon la revendication 5, dans lequel l'application (320) sur chacun de la pluralité de dispositifs terminaux mobiles (100) est configurée pour :
envoyer une requête HTTP POST pour se connecter à un serveur figurant dans la liste de priorités de serveurs, la requête HTTP POST incluant les données d'application provenant de l'application ; et
en réponse à une connexion réussie avec la requête HTTP POST, recevoir du serveur figurant dans la liste de priorités de serveurs un code d'état de succès HTTP accompagné de la nouvelle liste de priorités de serveurs, facultativement des données d'application en provenance du serveur et facultativement de la nouvelle liste de sondage.

7. Procédé mis en œuvre par une application (320) s'exécutant sur un dispositif terminal mobile (100) dans un réseau sans fil (110) pour l'établissement d'une connexion entre l'application et un agencement de serveurs distribués comprenant une pluralité de serveurs (120) déployés chacun dans un emplacement géographique différent, le procédé comprenant :
la mise en œuvre par l'application d'un processus de sondage comprenant :
la réception d'une liste de sondage en provenance de l'agencement de serveurs distribués, la liste de sondage identifiant un ou plusieurs serveurs de l'agencement de serveurs distribués ;
pour chaque serveur de la liste de sondage, le fait de tenter de se connecter au serveur et obtenir des informations relatives à la qualité de connexion pour le serveur ; et
le rapport des informations relatives à la qualité de connexion obtenues à un serveur de l'agencement de serveurs distribués ; et
la mise en œuvre par l'application d'un processus de connexion pour établir une connexion entre l'application et un serveur de l'agencement de serveurs distribués, le processus de connexion comprenant :
la réception d'une liste de priorités de serveurs en provenance de l'agencement de serveurs distribués, la liste de priorités de serveurs identifiant un ou plusieurs serveurs de l'agencement de serveurs distribués et un ordre de connexion y afférent sur la base des informations relatives à la qualité de connexion provenant de l'application et d'une pluralité d'applications sur différents dispositifs terminaux mobiles dans le réseau sans fil ; et
le fait de tenter de se connecter aux serveurs de la liste de priorités de serveurs, selon l'ordre de connexion, jusqu'à ce qu'une connexion soit établie ou jusqu'à ce qu'il n'y ait plus de serveurs dans la liste de priorités de serveurs.

8. Procédé selon la revendication 7, dans lequel les informations relatives à la qualité de connexion pour chaque serveur comprennent au moins l'un parmi :
un statut d'établissement de connexion indiquant si une connexion au serveur a été établie, et
un temps d'établissement de connexion indiquant une durée entre la tentative de connexion au serveur et l'établissement d'une connexion au serveur.

9. Procédé selon la revendication 7 ou la revendication 8, dans lequel l'application (320) :
fournit des informations relatives à un réglage de langue du dispositif terminal mobile à l'agencement de serveurs distribués ; et
reçoit la liste de priorités de serveurs sur la base du réglage de langue du dispositif terminal mobile.

10. Procédé selon l'une quelconque des revendications 7 à 9, dans lequel, lorsqu'une connexion à un serveur (120) figurant dans la liste de priorités de serveurs est établie dans le cadre du processus de connexion, l'application (320) :
envoie des données d'application au serveur ;
reçoit une nouvelle liste de priorités de serveurs en provenance du serveur ;
reçoit facultativement des données d'application en provenance du serveur ; et
reçoit facultativement une nouvelle liste de sondage en provenance du serveur.

11. Procédé selon la revendication 10, dans lequel :
l'application (320) envoie une requête HTTP POST pour se connecter à un serveur (120) figurant dans la liste de priorités de serveurs, la requête HTTP POST incluant les données d'application provenant de l'application ; et
en réponse à une connexion réussie avec la requête HTTP POST, l'application reçoit du serveur (120) un code d'état de succès HTTP, accompagné de la nouvelle liste de priorités de serveurs, facultativement des données d'application en provenance du serveur et facultativement de la nouvelle liste de sondage.

12. Procédé mis en œuvre par un agencement de serveurs distribués comprenant une pluralité de serveurs (120) déployés chacun dans un emplacement géographique différent, pour l'établissement d'une connexion entre une application (320) s'exécutant sur un dispositif terminal mobile (100) dans un réseau sans fil (110) et l'agencement de serveurs distribués, le procédé comprenant :
pour chacun d'une pluralité de dispositifs terminaux mobiles (100), l'agencement de serveurs distribués :
la fourniture d'une liste de sondage à une application (320) s'exécutant sur le dispositif terminal mobile, la liste de sondage identifiant un ou plusieurs serveurs (120) de l'agencement de serveurs distribués ; et
la réception d'informations relatives à la qualité de connexion rapportées par l'application s'exécutant sur le dispositif terminal mobile pour chaque serveur de la liste de sondage ; et
l'agencement de serveurs distribués :
la génération d'au moins une liste de priorités de serveurs sur la base des informations relatives à la qualité de connexion rapportées par la pluralité de dispositifs terminaux mobiles (100), chaque liste de priorités de serveurs identifiant un ou plusieurs serveurs (120) de l'agencement de serveurs distribués et un ordre de connexion y afférent ;
la fourniture d'une liste de priorités de serveurs à une application (320) sur un dispositif terminal mobile (100) ; et
en réponse à une tentative de connexion à un serveur (120) figurant dans la liste de priorités de serveurs provenance de l'application (320) sur le dispositif terminal mobile (100), l'établissement d'une connexion entre le serveur figurant dans la liste de priorités de serveurs et l'application sur le dispositif terminal mobile.

13. Procédé selon la revendication 12, dans lequel les informations relatives à la qualité de connexion pour chaque serveur (120) comprennent au moins l'un parmi :
un statut d'établissement de connexion indiquant si une connexion au serveur a été établie, et
un temps d'établissement de connexion indiquant une durée entre la tentative de connexion au serveur et l'établissement d'une connexion au serveur.

14. Procédé selon la revendication 12 ou la revendication 13, dans lequel :
l'agencement de serveurs distribués génère une pluralité de listes de priorités de serveurs ;
l'agencement de serveurs distribués reçoit des informations relatives à un réglage de langue du dispositif terminal mobile (100) ; et
l'agencement de serveurs distribués détermine laquelle de la pluralité de listes de priorités de serveurs fournir au dispositif terminal mobile (100) sur la base du réglage de langue du dispositif terminal mobile.

15. Procédé selon la revendication 12 ou la revendication 13, dans lequel :
l'agencement de serveurs distribués reçoit des informations relatives à un réglage de langue du dispositif terminal mobile (100) ; et
l'agencement de serveurs distribués génère une liste de priorités de serveurs pour le dispositif terminal mobile (100) sur la base du réglage de langue du dispositif terminal mobile.

16. Procédé selon l'une quelconque des revendications 12 à 15, dans lequel, lorsqu'une connexion entre un serveur (120) de l'agencement de serveurs distribués figurant dans la liste de priorités de serveurs et l'application (320) sur le dispositif terminal mobile (100) est établie, le serveur (120) de l'agencement de serveurs distribués figurant dans la liste de priorités de serveurs :
reçoit des données d'application en provenance de l'application ;
fournit une nouvelle liste de priorités de serveurs à l'application ;
fournit facultativement des données d'application à l'application ; et
fournit facultativement une nouvelle liste de sondage à l'application.

17. Procédé selon la revendication 16, dans lequel
le serveur (120) figurant dans la liste de priorités de serveurs reçoit une requête HTTP POST en provenance du dispositif terminal mobile (100) lorsque le dispositif terminal mobile tente de se connecter au serveur, la requête HTTP POST incluant les données d'application provenant de l'application (320) ; et
en réponse à une connexion réussie avec la requête HTTP POST, le serveur (120) envoie à l'application (320) un code d'état de succès HTTP, accompagné de la nouvelle liste de priorités de serveurs, facultativement des données d'application en provenance du serveur et facultativement de la nouvelle liste de sondage.

18. Programme informatique définissant une application devant être exécutée sur un dispositif terminal mobile, le programme informatique comprenant des instructions qui, lorsqu'elles sont mises en œuvre par le dispositif terminal mobile, amènent le dispositif terminal mobile à mettre en œuvre un procédé selon l'une quelconque des revendications 7 à 11.

19. Programme informatique pour un agencement de serveurs distribués, le programme informatique comprenant des instructions qui, lorsqu'elles sont mises en œuvre par l'agencement de serveurs distribués, amènent l'agencement de serveurs distribués à mettre en œuvre un procédé selon l'une quelconque des revendications 12 à 17.
